# EUROPEAN PATENT APPLICATION

(11) **EP 4 822 501 A1**
(43) Date of publication of application: **14.10.2026**
(21) Application number: 26153151.1
(22) Date of filing: 21.01.2026
(51) Int. Cl.: G06F 3/044

(54) **ELECTRONIC DEVICE**

(30) Priority: 07.04.2025 KR 20250044570
(71) Applicant: Samsung Display Co., Ltd., Yongin-si, Gyeonggi-do (KR)
(72) Inventor: LEE, Kyunghoe, Yongin-si (KR); JEONG, Hwan-Hee, Yongin-si (KR); KIM, Deokjung, Yongin-si (KR); NAM, Youngwoo, Yongin-si (KR)
(74) Representative: Marks & Clerk LLP

(57) **Abstract**

An electronic device includes: a display layer; and a sensor layer on the display layer, and including: first electrodes, each extending in a first direction, and including a sensing pattern and a bridge pattern; second electrodes, each extending in a second direction crossing the first direction; third electrodes extending in the first direction and insulated from the first electrodes, each including divided electrodes; a first connection line electrically connected with the sensing pattern; and a second connection line electrically connected with the divided electrodes. The third electrodes, the bridge pattern, and the second connection line are in a first conductive layer. The sensing pattern, the second electrodes, and the first connection line are in a second conductive layer different from the first conductive layer. The first connection line and the second connection line overlap with each other in a plan view.

## Description

### BACKGROUND

Aspects of embodiments of the present disclosure relate to an electronic device including a peripheral area having a reduced area.

Multimedia electronic devices, such as a television, a mobile phone, a tablet computer, a notebook computer, a car navigation device, a game machine, and the like, include a display panel for displaying an image. The electronic devices may include a sensor layer (e.g., an input sensor) capable of providing a touch-based input method that enables a user to intuitively and conveniently input information or instructions in an easy and simple manner, in addition to a general input method, such as a button, a keyboard, a mouse, or the like. The sensor layer may sense the user's touch or pressure. Further, pens for users who may be accustomed to inputting information using writing instruments, or pens for more accurate touch inputs in specific application programs (e.g., application programs for sketching or drawing), have been increasingly demanded.

The above information disclosed in this Background section is for enhancement of understanding of the background of the present disclosure, and therefore, it may contain information that does not constitute prior art.

### SUMMARY

Embodiments of the present disclosure may be directed to an electronic device including a peripheral area having a reduced area.

According to one or more embodiments of the present disclosure, an electronic device includes: a display layer; and a sensor layer on the display layer, and having a sensing area, and a peripheral area adjacent to the sensing area, the sensor layer including: a plurality of first electrodes in the sensing area, each of the first electrodes extending in a first direction, and including a sensing pattern and a bridge pattern; a plurality of second electrodes in the sensing area, each of the second electrodes extending in a second direction crossing the first direction; a plurality of third electrodes extending in the first direction in the sensing area and insulated from the first electrodes, each of the third electrodes including a plurality of divided electrodes; a first connection line in the peripheral area and electrically connected with the sensing pattern; and a second connection line in the peripheral area and electrically connected with the plurality of divided electrodes. The plurality of third electrodes, the bridge pattern, and the second connection line are in a first conductive layer. The sensing pattern, the plurality of second electrodes, and the first connection line are in a second conductive layer different from the first conductive layer. The first connection line and the second connection line overlap with each other in a plan view.

In an embodiment, the first connection line and the sensing pattern may be integrally connected with each other, and the second connection line and the plurality of divided electrodes may be integrally connected with each other.

In an embodiment, the first connection line and the second connection line may extend in the second direction.

In an embodiment, the electronic device may further include: a first trace line in the peripheral area and connected with the first connection line; and a second trace line in the peripheral area and connected to the second connection line.

In an embodiment, the electronic device may further include: a first pad in the peripheral area and connected with the first trace line; and a second pad in the peripheral area and connected with the second trace line.

In an embodiment, the first trace line may include a first-first portion extending in the second direction, and a first-second portion extending in the first direction and connected between the first-first portion and the first pad.

In an embodiment, the first-first portion may include a single layer in the first conductive layer or the second conductive layer, and the first-second portion may include multiple layers in the first conductive layer and the second conductive layer.

In an embodiment, the sensor layer may further include a connecting electrode overlapping with the first connection line in a plan view, the first-first portion may be integrally connected with the connecting electrode, and the connecting electrode may be connected with the first connection line through a contact hole.

In an embodiment, in a plan view, the first pad may be located on a first side of the sensor layer, and the second pad may be located on a second side of the sensor layer spaced from the first side in the second direction.

In an embodiment, in a plan view, the first pad may be located on a first side of the sensor layer, and the second pad may be located adjacent to the first pad.

In an embodiment, the electronic device may further include a plurality of third trace lines in the peripheral area, and electrically connected with the plurality of second electrodes, respectively.

In an embodiment, each of the plurality of third trace lines may include: a third-first portion connected with one of the plurality of second electrodes, and extending in the first direction; and a third-second portion electrically connected with the third-first portion, and extending in the second direction.

In an embodiment, the third-second portion may include: a first sub-portion in the first conductive layer; and a second sub-portion in the second conductive layer and electrically connected with the first sub-portion.

In an embodiment, in a plan view, the first sub-portion of one of the plurality of third trace lines and the second sub-portion of another one of the plurality of third trace lines may be adjacent to each other in the first direction, and may not overlap with each other.

In an embodiment, the first connection line and the second connection line may be electrically insulated from each other.

In an embodiment, the sensing pattern may overlap with the plurality of divided electrodes in a plan view.

According to one or more embodiments of the present disclosure, an electronic device includes: a display layer; and a sensor layer on the display layer, and including: a plurality of first electrodes, each of the first electrodes extending in a first direction, and including a sensing pattern and a bridge pattern; a plurality of second electrodes, each of the second electrodes extending in the first direction, and including a plurality of divided electrodes; a first connection line integrally connected with the sensing pattern, and extending in a second direction crossing the first direction; and a second connection line integrally connected with the plurality of divided electrodes, and extending in the second direction. The first connection line and the second connection line are located in different layers from each other, and the first connection line and the second connection line overlap with each other in a plan view.

In an embodiment, the electronic device may further include: a first trace line connected with the first connection line; and a second trace line connected to the second connection line.

In an embodiment, the first trace line may include: a first-first portion extending in the second direction, and including a single layer; and a first-second portion extending from the first-first portion in the first direction, and including multiple layers.

In an embodiment, the electronic device may further include: a first pad connected with the first trace line; and a second pad connected with the second trace line. In a plan view, the first pad may be located on a first side of the sensor layer, and the second pad may be located on a second side of the sensor layer spaced from the first side in the second direction.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments with reference to the accompanying drawings.
FIG. 1 is a block diagram of an electronic device according to an embodiment of the present disclosure.
FIG. 2 illustrates schematic views of some electronic devices according to some embodiments.
FIG. 3A is a front perspective view of an electronic device according to an embodiment of the present disclosure.
FIG. 3B is a rear perspective view of an electronic device according to an embodiment of the present disclosure.
FIG. 4 is a perspective view of an electronic device according to an embodiment of the present disclosure.
FIG. 5 is a perspective view of an electronic device according to an embodiment of the present disclosure.
FIG. 6 is a schematic sectional view illustrating a display module according to an embodiment of the present disclosure.
FIG. 7 is a schematic view illustrating an operation of an electronic device according to an embodiment of the present disclosure.
FIG. 8 is a sectional view of a display module according to an embodiment of the present disclosure.
FIG. 9 is a sectional view illustrating some components of a sensor layer according to an embodiment of the present disclosure.
FIG. 10 is a plan view illustrating a sensor layer according to an embodiment of the present disclosure.
FIG. 11 is a plan view illustrating a first conductive layer of a sensing unit according to an embodiment of the present disclosure.
FIG. 12 is an enlarged plan view illustrating the area XX' of FIG. 11 according to an embodiment of the present disclosure.
FIG. 13 is a plan view illustrating a second conductive layer of a sensing unit according to an embodiment of the present disclosure.
FIG. 14 is an enlarged plan view illustrating the area YY' of FIG. 13 according to an embodiment of the present disclosure.
FIG. 15 is a schematic view illustrating an operation of a sensor driver according to an embodiment of the present disclosure.
FIG. 16 is a schematic view illustrating an operation of a sensor driver according to an embodiment of the present disclosure.
FIG. 17 is a plan view illustrating a first mode according to an embodiment of the present disclosure.
FIG. 18 is a plan view illustrating a second mode, such as a charging operation mode, according to an embodiment of the present disclosure.
FIG. 19A is a graph depicting a waveform of a first signal according to an embodiment of the present disclosure.
FIG. 19B is a graph depicting a waveform of a second signal according to an embodiment of the present disclosure.
FIG. 20 is a plan view illustrating a second mode according to an embodiment of the present disclosure.
FIG. 21 is a view illustrating a second mode based on one sensing unit according to an embodiment of the present disclosure.
FIG. 22 is an enlarged plan view illustrating the area AA' of FIG. 10 according to an embodiment of the present disclosure.
FIG. 23 is a sectional view of a sensor layer taken along the line I-I' of FIG. 22 according to an embodiment of the present disclosure.
FIG. 24 is a sectional view of a sensor layer taken along the line II-II' of FIG. 22 according to an embodiment of the present disclosure.
FIG. 25 is an enlarged plan view illustrating the area BB' of FIG. 22 according to an embodiment of the present disclosure.
FIG. 26 is a sectional view of a sensor layer taken along the line III-III' of FIG. 25 according to an embodiment of the present disclosure.
FIG. 27 is a sectional view of a sensor layer taken along the line IV-IV' of FIG. 25 according to an embodiment of the present disclosure.
FIG. 28 is an enlarged plan view illustrating the area aa' of FIG. 10 according to an embodiment of the present disclosure.
FIG. 29 is an enlarged plan view illustrating the area bb' of FIG. 10 according to an embodiment of the present disclosure.
FIG. 30 is a sectional view of a sensor layer taken along the line V-V' of FIG. 29 according to an embodiment of the present disclosure.
FIG. 31 is a plan view illustrating a sensor layer according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

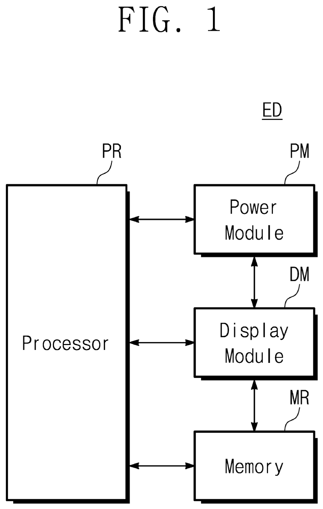

FIG. 1 is a block diagram of an electronic device according to an embodiment of the present disclosure.

The electronic device according to embodiments of the present disclosure may be provided in various suitable forms. The electronic device may include a display or a touch-display, and may further include other modules or devices having other additional functions.

Referring to FIG. 1, the electronic device ED according to an embodiment may include a display module (e.g., a display or a touch-display) DM, a processor PR, a memory MR, and a power module (e.g., a power circuit or a power supply) PM.

The processor PR may include at least one of a central processing unit (CPU), an application processor (AP), a graphic processing unit (GPU), a communication processor (CP), an image signal processor (ISP), and/or a controller. The processor PR may control the power module PM, the display module DM, and the memory MR.

Data information used for operations of the processor PR or the display module DM may be stored in the memory MR. When the processor PR executes an application stored in the memory MR, an image data signal and/or an input control signal may be transferred to the display module DM, and the display module DM may process the provided signal to output image information through a display screen.

The power module PM may include a power supply module, such as a power adapter or a battery device, and a power conversion module that converts power supplied by the power supply module to generate power used for operations of the electronic device ED.

The display module DM may operate in response to an electrical signal. Some separate modules functionally included in one module may be included in the display module DM, and the others may be provided in the electronic device ED separately from the display module DM.

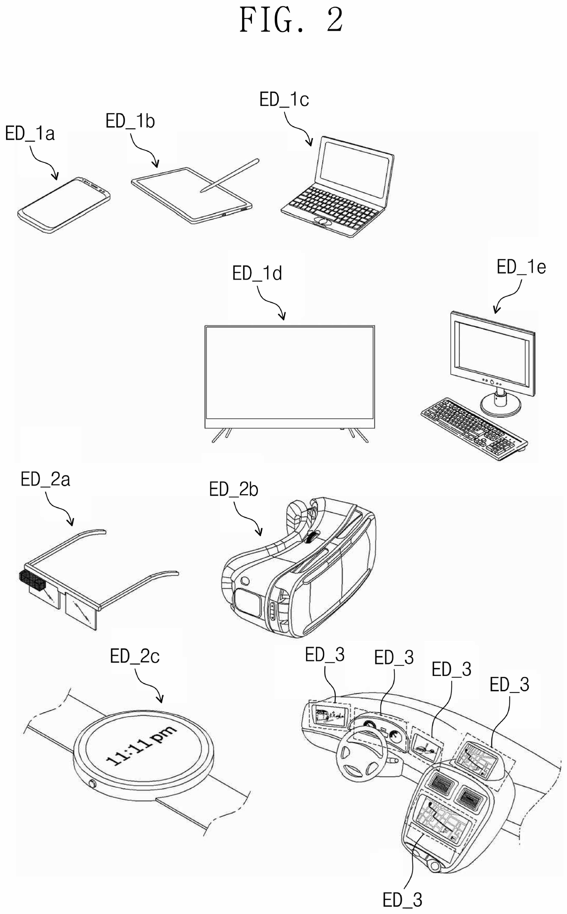

FIG. 2 illustrates schematic views of some electronic devices according to some embodiments.

Referring to FIG. 2, the electronic devices according to some embodiments may include not only electronic devices for displaying an image, such as a smart phone Ed-1a, a tablet PC Ed-1b, a laptop computer Ed-1c, a TV Ed-1d, and a desk monitor Ed-1e, but may also include wearable electronic devices including a display module, such as smart glasses ED-2a, a head mounted display ED-2b, and a smart watch ED-2c.

In addition, the electronic devices according to some embodiments may be applied to the inside of a transport device, such as a vehicle, and may provide various pieces of information to a user through images. For example, the electronic device according to some embodiments of the present disclosure may be provided in the form of vehicle electronic devices ED-3 including a display module, such as center information displays (CID) disposed on an instrument panel, a center fascia, and a dashboard of a vehicle, and a room mirror display.

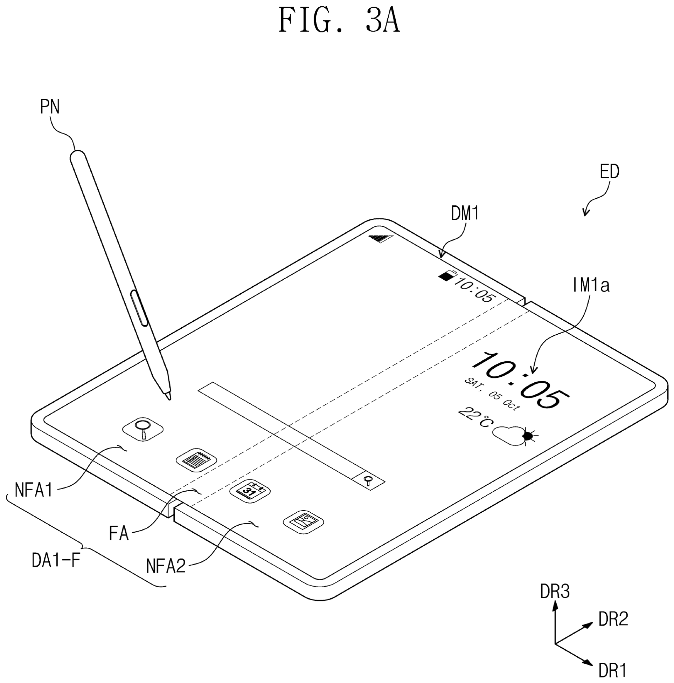

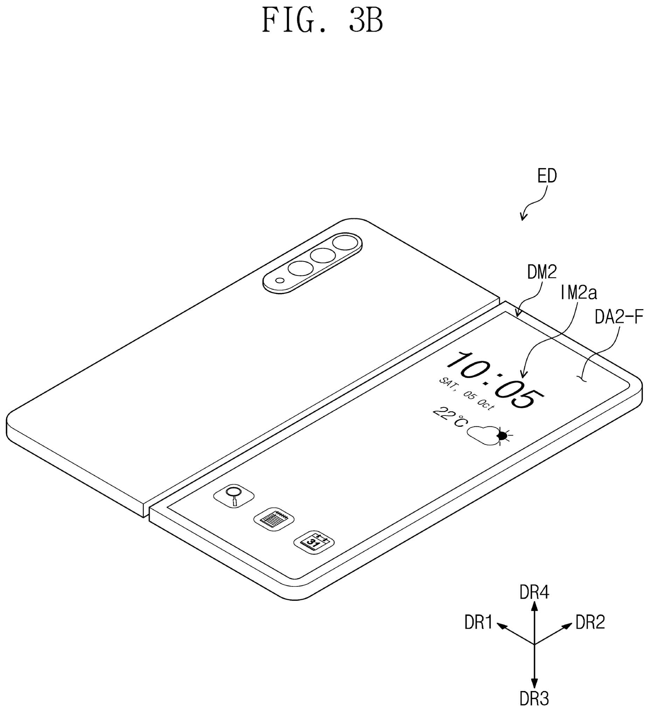

FIG. 3A is a front perspective view of an electronic device according to an embodiment of the present disclosure. FIG. 3B is a rear perspective view of the electronic device according to an embodiment of the present disclosure.

Referring to FIGS. 3A and 3B, the electronic device ED may be a device that is activated in response to an electrical signal. For example, the electronic device ED may display an image, and may sense external inputs applied from the outside. The external inputs may be user inputs. The user inputs may include various suitable kinds of external inputs, such as a part of a user's body, a pen PN, light, heat, or pressure.

The electronic device ED may include a first display module (e.g., a first display or a first touch-display) DM1 and a second display module (e.g., a second display or a second touch-display) DM2. The first display module DM1 and the second display module DM2 may be separate panels that are separated from each other. The first display module DM1 may be referred to as a main display panel, and the second display module DM2 may be referred to as an auxiliary display panel or an external display panel.

The first display module DM1 may include a first display DA1-F, and the second display module DM2 may include a second display DA2-F. The second display module DM2 may have a smaller area than that of the first display module DM1. The area of the first display DA1-F may be greater than the area of the second display DA2-F in correspondence to the sizes of the first display module DM1 and the second display module DM2.

In an unfolded state of the electronic device ED, the first display DA1-F may have a plane that is parallel to or substantially parallel to a first direction DR1 and a second direction DR2. The thickness direction of the electronic device ED may be parallel to or substantially parallel to a third direction DR3 crossing the first direction DR1 and the second direction DR2. Accordingly, front surfaces (e.g., upper surfaces) and rear surfaces (e.g., lower surfaces) of members constituting the electronic device ED may be defined based on the third direction DR3.

The first display module DM1 or the first display DA1-F may include a folding area FA that may be folded and unfolded, and a plurality of non-folding areas NFA1 and NFA2 spaced apart from each other with the folding area FA therebetween. The second display module DM2 may overlap with one of the plurality of non-folding areas NFA1 and NFA2. For example, the second display module DM2 may overlap with the first non-folding area NFA1.

The display direction of a first image IM1a displayed on a portion of the first display module DM1, for example, such as on the first non-folding area NFA1, and the display direction of a second image IM2a displayed on the second display module DM2 may be opposite to each other. For example, the first image IM1a may be displayed in the third direction DR3, and the second image IM2a may be displayed in a fourth direction DR4 opposite to the third direction DR3.

In an embodiment of the present disclosure, the folding area FA may be bent about a folding axis extending in a direction parallel to or substantially parallel to the long sides of the electronic device ED, for example, such as in a direction parallel to the second direction DR2. In a folded state of the electronic device ED, the folding area FA may have a suitable curvature (e.g., a certain or predetermined curvature) and a suitable radius of curvature (e.g., a certain or predetermined radius of curvature). The first non-folding area NFA1 and the second non-folding area NFA2 may face each other, and the electronic device ED may be folded in an inner-folding manner, such that the first display DA1-F is not exposed to the outside.

In an embodiment of the present disclosure, the electronic device ED may be folded in an outer-folding manner, such that the first display DA1-F is exposed to the outside. In an embodiment of the present disclosure, the electronic device ED may be folded in both an inner-folding manner or an outer-folding manner from the unfolded state, but the present disclosure is not limited thereto.

Although FIG. 3A illustrates an example in which one folding area FA is defined (e.g., provided or included) in the electronic device ED, the present disclosure is not limited thereto. For example, a plurality of folding axes and a plurality of folding areas corresponding thereto may be defined in the electronic device ED, and the electronic device ED may be folded in an inner-folding manner or an outer-folding manner from the unfolded state in each of the plurality of folding areas.

According to an embodiment of the present disclosure, at least one of the first display module DM1 and/or the second display module DM2 may sense an input by the pen PN even without a digitizer. Accordingly, an increase in the thickness and the weight of the electronic device ED and a reduction in the flexibility of the electronic device ED due to the addition of the digitizer may not occur, because the digitizer for sensing the pen PN may be omitted. Thus, not only the first display module DM1, but also the second display module DM2, may be designed to sense the pen PN.

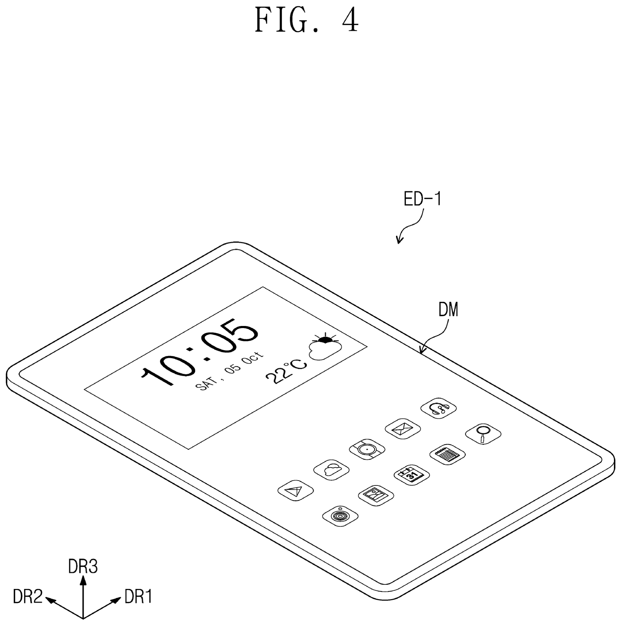

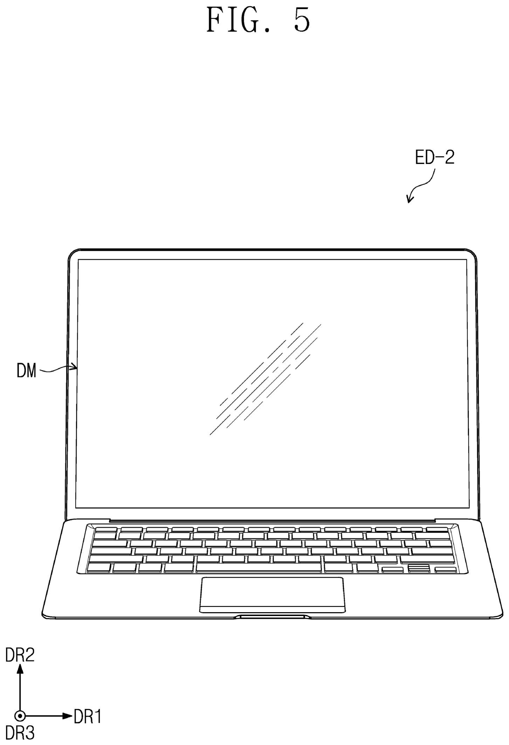

FIG. 4 is a perspective view of an electronic device according to an embodiment of the present disclosure. FIG. 5 is a perspective view of an electronic device according to an embodiment of the present disclosure.

FIG. 4 illustrates an example in which the electronic device ED-1 is a mobile phone or a tablet PC, and the electronic device ED-1 may include the display module DM. FIG. 5 illustrates an example in which the electronic device ED-2 is a notebook computer, and the electronic device ED-2 may include the display module DM.

Referring to FIGS. 3A to 5, the display module DM may sense external inputs applied from the outside. The external inputs may be user inputs. The user inputs may include various suitable kinds of external inputs, such as a part of a user's body, the pen PN, light, heat, or pressure.

According to an embodiment of the present disclosure, the display module DM may sense an input by the pen PN even without a digitizer. Accordingly, an increase in the thickness and the weight of the electronic device ED-1 or ED-2 due to the addition of the digitizer may not occur, because the digitizer for sensing the pen PN may be omitted.

FIG. 3A illustrates the foldable electronic device ED, and FIG. 4 illustrates a bar-kind of electronic device ED-1. However, embodiments of the present disclosure to be described in more detail below are not limited thereto. For example, the following description of some embodiments may be applied to various suitable kinds of electronic devices, such as a rollable electronic device, a slidable electronic device, and a stretchable electronic device.

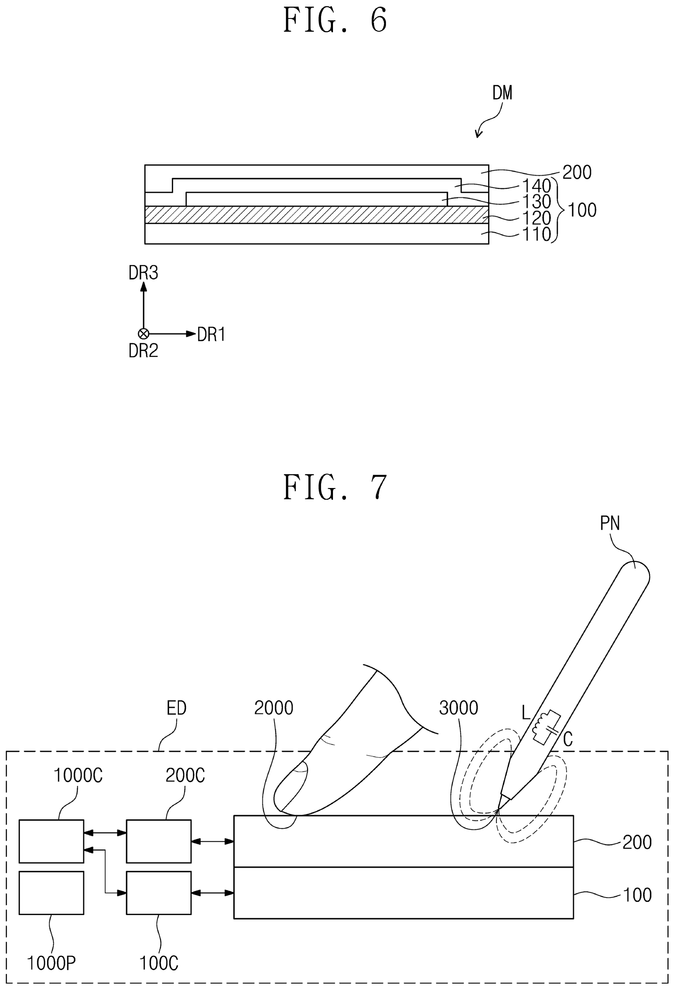

FIG. 6 is a schematic sectional view illustrating a display module according to an embodiment of the present disclosure.

Referring to FIG. 6, the display module DM may include a display layer 100 and a sensor layer 200.

The display layer 100 may be a component that substantially generates an image. The display layer 100 may be an emissive display layer. For example, the display layer 100 may be an organic light emitting display layer, an inorganic light emitting display layer, an organic-inorganic light emitting display layer, a quantum-dot display layer, a micro-LED display layer, or a nano-LED display layer. The display layer 100 may include a base layer 110, a circuit layer 120, a light emitting element layer 130, and an encapsulation layer 140.

The base layer 110 may be a member that provides a base surface on which the circuit layer 120 is disposed. The base layer 110 may have a multi-layered structure or a single-layer structure. The base layer 110 may be a glass substrate, a metal substrate, a silicon substrate, or a polymer substrate, but the present disclosure is not particularly limited thereto.

The circuit layer 120 may be disposed on the base layer 110. The circuit layer 120 may include an insulating layer, a semiconductor pattern, a conductive pattern, and a signal line. An insulating layer, a semiconductor layer, and a conductive layer may be formed on the base layer 110 by coating or deposition. The insulating layer, the semiconductor layer, and the conductive layer may be selectively subjected to patterning by performing a photolithography process a plurality of times.

The light emitting element layer 130 may be disposed on the circuit layer 120. The light emitting element layer 130 may include a light emitting element. For example, the light emitting element layer 130 may include an organic luminescent material, an inorganic luminescent material, an organic-inorganic luminescent material, a quantum dot, a quantum rod, a micro-LED, or a nano-LED.

The encapsulation layer 140 may be disposed on the light emitting element layer 130. The encapsulation layer 140 may protect the light emitting element layer 130 from foreign matter, such as moisture, oxygen, and dust particles.

The sensor layer 200 may be disposed on the display layer 100. The sensor layer 200 may sense an external input applied from the outside. The sensor layer 200 may be an integrated sensor that is continuously formed in a manufacturing process of the display layer 100, or the sensor layer 200 may be an external sensor that is attached to the display layer 100. The sensor layer 200 may be referred to as a sensor, an input sensing layer, an input sensing panel, or an electronic device for sensing input coordinates.

According to an embodiment of the present disclosure, the sensor layer 200 may sense both an input by a passive input means, such as the user's body, and an input by an input device that generates a magnetic field having a suitable resonant frequency (e.g., a certain or predetermined resonant frequency). The input device may be referred to as a pen, an input pen, a magnetic pen, a stylus pen, or an electromagnetic resonance pen.

FIG. 7 is a schematic view illustrating an operation of an electronic device according to an embodiment of the present disclosure.

Referring to FIG. 7, the electronic device ED may include the display layer 100, the sensor layer 200, a display driver 100C, a sensor driver 200C, a main driver 1000C, and a power circuit 1000P.

The sensor layer 200 may sense a first input 2000 or a second input 3000 applied from the outside. Each of the first input 2000 and the second input 3000 may be an input by an input means capable of changing a capacitance of the sensor layer 200, or an input by an input means capable of causing an induced current in the sensor layer 200. For example, the first input 2000 may be an input by a passive input means, such as a user's body. The second input 3000 may be an input by the pen PN, or may be an input by an RFIC tag. For example, the pen PN may be a passive pen or an active pen.

In an embodiment of the present disclosure, the pen PN may be a device that generates a magnetic field having a suitable resonant frequency (e.g., a certain or predetermined resonant frequency). The pen PN may transmit an output signal based on an electromagnetic resonance scheme. The pen PN may be referred to as an input device, an input pen, a magnetic pen, a stylus pen, or an electromagnetic resonance pen.

The pen PN may include an RLC resonance circuit, and the RLC resonance circuit may include an inductor L and a capacitor C. In an embodiment of the present disclosure, the RLC resonant circuit may be a variable resonance circuit that varies the resonant frequency. In this case, the inductor L may be a variable inductor, and/or the capacitor C may be a variable capacitor. However, the present disclosure is not particularly limited thereto.

The inductor L generates a current by a magnetic field formed in the electronic device ED, for example, such as in the sensor layer 200. However, the present disclosure is not particularly limited thereto. For example, when the pen PN operates in an active kind, the pen PN may generate a current even though a magnetic field is not provided from the outside. The generated current is transferred to the capacitor C. The capacitor C charges the current input from the inductor L, and discharges the charged current to the inductor L. Thereafter, the inductor L may emit a magnetic field having a resonant frequency. An induced current may flow in the sensor layer 200 due to the magnetic field emitted by the pen PN. The induced current may be transferred to the sensor driver 200C as a reception signal (e.g., a sensing signal or a signal).

The main driver 1000C may control the overall operations of the electronic device ED. For example, the main driver 1000C may control operations of the display driver 100C and the sensor driver 200C. The main driver 1000C may include at least one microprocessor, and may further include a graphic controller. The main driver 1000C may be referred to as an application processor, a central processing unit, or a main processor.

The display driver 100C may drive the display layer 100. The display driver 100C may receive image data and a control signal from the main driver 1000C. The control signal may include various suitable signals. For example, the control signal may include a vertical input synchronization signal, a horizontal input synchronization signal, a main clock signal, and a data enable signal.

The sensor driver 200C may drive the sensor layer 200. The sensor driver 200C may receive a control signal from the main driver 1000C. The control signal may include a clock signal of the sensor driver 200C. In addition, the control signal may further include a mode determination signal for determining an operation mode of the sensor driver 200C and the sensor layer 200.

The sensor driver 200C may be implemented with an integrated circuit (IC), and may be electrically connected with the sensor layer 200. For example, the sensor driver 200C may be directly mounted on a suitable area (e.g., a certain or predetermined area) of the display panel, or may be mounted on a separate printed circuit board in a chip on film (COF) manner and electrically connected with the sensor layer 200.

The sensor driver 200C and the sensor layer 200 may selectively operate in a first mode or a second mode. For example, the first mode may be a mode for sensing a touch input, for example, such as the first input 2000. The second mode may be a mode for sensing an input by the pen PN, for example, such as the second input 3000. The first mode may be referred to as a touch sensing mode, and the second mode may be referred to as a pen sensing mode.

A transition between the first mode and the second mode may be performed in various suitable ways. For example, the sensor driver 200C and the sensor layer 200 may be driven in the first mode and the second mode in a time division manner, and may sense the first input 2000 and the second input 3000. As another example, the transition between the first mode and the second mode may occur through a selection by the user or a specific action (e.g., input) of the user. As another example, by an activation or a deactivation of a specific application, one of the first mode and/or the second mode may be activated or deactivated, or the operation mode may be switched from one mode to the other mode. As another example, while the sensor driver 200C and the sensor layer 200 alternately operate in the first mode and the second mode, when the first input 2000 is sensed, the sensor driver 200C and the sensor layer 200 may be maintained in the first mode, and when the second input 3000 is sensed, the sensor driver 200C and the sensor layer 200 may be maintained in the second mode.

The sensor driver 200C may calculate coordinate information of an input based on a signal received from the sensor layer 200, and may provide a coordinate signal having the coordinate information to the main driver 1000C. The main driver 1000C executes an operation corresponding to the user input based on the coordinate signal. For example, the main driver 1000C may operate the display driver 100C, such that a new application image is displayed on the display layer 100.

The power circuit 1000P may include a power management integrated circuit (PMIC). The power circuit 1000P may generate a plurality of driving voltages for driving the display layer 100, the sensor layer 200, the display driver 100C, and the sensor driver 200C. For example, the plurality of driving voltages may include a gate high voltage, a gate low voltage, a first driving voltage (e.g., an ELVSS voltage), a second driving voltage (e.g., an ELVDD voltage), and an initialization voltage, but the present disclosure is not particularly limited thereto.

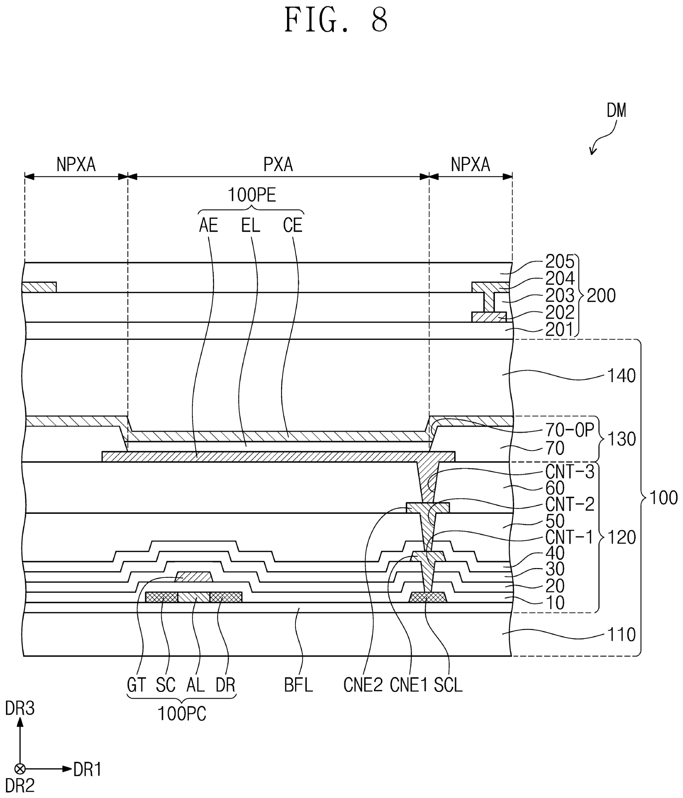

FIG. 8 is a sectional view of a display module according to an embodiment of the present disclosure. In FIG. 8, the components that are the same or substantially the same as those described above with reference to FIG. 6 are assigned with identical reference numerals, and thus, redundant description thereabout may not be repeated.

Referring to FIG. 8, at least one buffer layer BFL may be formed on the upper surface of the base layer 110. The buffer layer BFL may improve a coupling force between the base layer 110 and a semiconductor pattern. The buffer layer BFL may be formed of multiple layers. As another example, the display layer 100 may further include a barrier layer. The buffer layer BFL may include at least one of silicon oxide, silicon nitride, and/or silicon oxy nitride. For example, the buffer layer BFL may include a structure in which silicon oxide layers and silicon nitride layers are alternately stacked one above another.

The semiconductor pattern SC, AL, DR, and SCL may be disposed on the buffer layer BFL. The semiconductor pattern SC, AL, DR, and SCL may include poly silicon. However, the present disclosure is not limited thereto, and the semiconductor pattern SC, AL, DR, and SCL may include amorphous silicon, a low-temperature polycrystalline silicon, or an oxide semiconductor.

FIG. 8 illustrates a portion of the semiconductor pattern SC, AL, DR, and SCL, and the semiconductor pattern may be further disposed in other areas in other views. The semiconductor pattern SC, AL, DR, and SCL may be arranged across pixels according to a desired rule (e.g., a specific or predetermined rule). The semiconductor pattern SC, AL, DR, and SCL may have different electrical properties depending on whether doping is performed or not. The semiconductor pattern SC, AL, DR, and SCL may include first areas SC, DR, and SCL having a higher conductivity, and a second area AL having a lower conductivity. The first areas SC, DR, and SCL may be doped with an N-type dopant or a P-type dopant. A P-type transistor may include a doped area doped with a P-type dopant, and an N-type transistor may include a doped area doped with an N-type dopant. The second area AL may be a non-doped area, or may be an area that is more lightly doped than the first areas SC, DR, and SCL.

The first areas SC, DR, and SCL may have a higher conductivity than that of the second area AL, and may substantially serve as electrodes or signal lines. The second area AL may substantially correspond to an active area AL (e.g., a channel) of a transistor 100PC. In other words, a portion AL of the semiconductor pattern SC, AL, DR, and SCL may be the active area AL of the transistor 100PC, another portion SC or DR may be a source area SC or a drain area DR of the transistor 100PC, and another portion SCL may be a connecting electrode or a connecting signal line SCL.

Each of the pixels may have an equivalent circuit including a plurality of transistors, at least one capacitor, and at least one light emitting element, but the equivalent circuit of the pixel may be variously modified as needed or desired. In FIG. 8, one transistor 100PC and one light emitting element 100PE included in one pixel are illustrated as an example.

The source area SC, the active area AL, and the drain area DR of the transistor 100PC may be formed from the semiconductor pattern SC, AL, DR, and SCL. The source area SC and the drain area DR may extend from the active area AL in opposite directions from each other on the cross-section. In FIG. 8, a portion of the connecting signal line SCL formed from the semiconductor pattern SC, AL, DR, and SCL is illustrated. In another view, the connecting signal line SCL may be connected to the drain area DR of the transistor 100PC when viewed from above the plane (e.g., in a plan view).

A first insulating layer 10 may be disposed on the buffer layer BFL. The first insulating layer 10 may commonly overlap with the plurality of pixels, and may cover the semiconductor pattern SC, AL, DR, and SCL. The first insulating layer 10 may be an inorganic layer and/or an organic layer, and may have a single-layer structure or a multi-layered structure. The first insulating layer 10 may include at least one of aluminum oxide, titanium oxide, silicon oxide, silicon nitride, silicon oxy nitride, zirconium oxide, and/or hafnium oxide. In the present embodiment, the first insulating layer 10 may be a single silicon oxide layer. Not only the first insulating layer 10, but also insulating layers of the circuit layer 120 to be described in more detail below, may be inorganic layers and/or organic layers, and may have a single-layer structure or a multi-layered structure. The inorganic layers may include at least one of the aforementioned inorganic materials, but the present disclosure is not limited thereto.

A gate GT of the transistor 100PC is disposed on the first insulating layer 10. The gate GT may be a portion of a metal pattern. The gate GT overlaps with the active area AL. The gate GT may function as a mask in a process of doping or reducing the semiconductor pattern SC, AL, DR, and SCL.

A second insulating layer 20 may be disposed on the first insulating layer 10, and may cover the gate GT. The second insulating layer 20 may commonly overlap with the pixels. The second insulating layer 20 may be an inorganic layer and/or an organic layer, and may have a single-layer structure or a multi-layered structure. The second insulating layer 20 may include at least one of silicon oxide, silicon nitride, and/or silicon oxy nitride. In the present embodiment, the second insulating layer 20 may have a multi-layered structure including a silicon oxide layer and a silicon nitride layer.

A third insulating layer 30 may be disposed on the second insulting layer 20. The third insulating layer 30 may have a single-layer structure or a multi-layered structure. For example, the third insulating layer 30 may have a multi-layered structure including a silicon oxide layer and a silicon nitride layer.

A first connecting electrode CNE1 may be disposed on the third insulating layer 30. The first connecting electrode CNE1 may be connected to the connecting signal line SCL through a contact hole CNT-1 that penetrates the first insulating layer 10, the second insulating layer 20, and the third insulating layer30.

A fourth insulating layer 40 may be disposed on the third insulting layer 30. The fourth insulating layer 40 may be a single silicon oxide layer. A fifth insulating layer 50 may be disposed on the fourth insulting layer 40. The fifth insulating layer 50 may be an organic layer.

A second connecting electrode CNE2 may be disposed on the fifth insulating layer 50. The second connecting electrode CNE2 may be connected to the first connecting electrode CNE1 through a contact hole CNT-2 that penetrates the fourth insulating layer 40 and the fifth insulating layer 50.

A sixth insulating layer 60 may be disposed on the fifth insulating layer 50, and may cover the second connecting electrode CNE2. The sixth insulating layer 60 may be an organic layer.

The light emitting element layer 130 may be disposed on the circuit layer 120. The light emitting element layer 130 may include the light emitting element 100PE. For example, the light emitting element layer 130 may include an organic luminescent material, an inorganic luminescent material, an organic-inorganic luminescent material, a quantum dot, a quantum rod, a micro-LED, or a nano-LED. Hereinafter, for convenience of illustration, the light emitting element 100PE may be described in more detail in the context of an organic light emitting element. However, the present disclosure is not particularly limited thereto.

The light emitting element 100PE may include a first electrode AE, an emissive layer EL, and a second electrode CE.

The first electrode AE may be disposed on the sixth insulting layer 60. The first electrode AE may be connected to the second connecting electrode CNE2 through a contact hole CNT-3 that penetrates the sixth insulating layer 60.

A pixel defining layer 70 may be disposed on the sixth insulating layer 60, and may cover a portion of the first electrode AE. An opening 70-OP is defined in the pixel defining layer 70. The opening 70-OP of the pixel defining layer 70 exposes at least a portion of the first electrode AE.

The first display DA1-F (e.g., refer to FIG. 3A) may include an emissive area PXA, and a non-emissive area NPXA adjacent to the emissive area PXA. The non-emissive area NPXA may surround (e.g., around a periphery of) the emissive area PXA. In the present embodiment, the emissive area PXA is defined to correspond to a partial area of the first electrode AE exposed by the opening 70-OP.

The emissive layer EL may be disposed on the first electrode AE. The emissive layer EL may be disposed in an area corresponding to the opening 70-OP. Although FIG. 8 illustrates an example in which the emissive layer EL is disposed in the opening 70-OP, the present disclosure is not particularly limited thereto. For example, the emissive layer EL may extend to cover the side surface of the pixel defining layer 70 that defines the opening 70-OP, and a portion of the upper surface of the pixel defining layer 70.

In an embodiment of the present disclosure, the emissive layer EL may be separately formed in each of the pixels. When the emissive layer EL is separately formed in each of the pixels, each of the emissive layers EL may emit at least one of a blue light, a red light, and/or or a green light. However, the present disclosure is not limited thereto, and the emissive layer EL may have a one-body shape to be commonly included in the plurality of pixels. In this case, the emissive layer EL may provide a blue light or a white light.

The second electrode CE may be disposed on the emissive layer EL. The second electrode CE may have a one-body shape, and may be commonly included in the plurality of pixels.

In an embodiment of the present disclosure, a hole control layer may be disposed between the first electrode AE and the emissive layer EL. The hole control layer may be commonly disposed in the emissive area PXA and the non-emissive area NPXA. The hole control layer may include a hole transport layer, and may further include a hole injection layer as needed or desired. An electron control layer may be disposed between the emissive layer EL and the second electrode CE. The electron control layer may include an electron transport layer, and may further include an electron injection layer as needed or desired. The hole control layer and the electron control layer may be commonly formed in the plurality of pixels using an open mask or an ink-jet process.

The encapsulation layer 140 may be disposed on the light emitting element layer 130. The encapsulation layer 140 may include an inorganic layer, an organic layer, and an inorganic layer sequentially stacked one above another. However, the layers constituting the encapsulation layer 140 are not limited thereto. The inorganic layers may protect the light emitting element layer 130 from moisture and oxygen, and the organic layer may protect the light emitting element layer 130 from foreign matter, such as dust particles. The inorganic layers may include a silicon nitride layer, a silicon oxy nitride layer, a silicon oxide layer, a titanium oxide layer, or an aluminum oxide layer. The organic layer may include an acrylic organic layer, but the present disclosure is not limited thereto.

The sensor layer 200 may include a base layer 201, a first conductive layer 202, an intermediate insulating layer 203, a second conductive layer 204, and a cover insulating layer 205.

The base layer 201 may be an inorganic layer including at least one of silicon nitride, silicon oxy nitride, and/or silicon oxide. As another example, the base layer 201 may be an organic layer including an epoxy resin, an acrylic resin, or an imide-based resin. The base layer 201 may have a single-layer structure, or may have a multi-layered structure stacked in the third direction DR3. In an embodiment of the present disclosure, the sensor layer 200 may not include the base layer 201.

Each of the first conductive layer 202 and the second conductive layer 204 may have a single-layer structure, or may have a multi-layered structure stacked in the third direction DR3.

Each of the first conductive layer 202 and the second conductive layer 204 that have a single-layer structure may include a metal layer or a transparent conductive layer. The metal layer may include molybdenum, silver, titanium, copper, aluminum, or a suitable alloy thereof. The transparent conductive layer may include a transparent conductive oxide, such as indium tin oxide (ITO), indium zinc oxide (IZO), zinc oxide (ZnO), or indium zinc tin oxide (IZTO). In addition, the transparent conductive layer may include a conductive polymer, such as poly(3,4-ethylenedioxythiophene)(PEDOT), a metal nano wire, or graphene.

Each of the first conductive layer 202 and the second conductive layer 204 that have a multi-layered structure may include a plurality of metal layers. The metal layers may have, for example, a three-layered structure of titanium/aluminum/titanium. The conductive layer having the multi-layered structure may include at least one metal layer and at least one transparent conductive layer.

In an embodiment of the present disclosure, the thickness of the first conductive layer 202 may be greater than or equal to the thickness of the second conductive layer 204. When the thickness of the first conductive layer 202 is greater than the thickness of the second conductive layer 204, a resistance of a component (e.g., an electrode, a pattern, or a bridge pattern) included in the first conductive layer 202 may be decreased. In addition, because the first conductive layer 202 may be disposed under the second conductive layer 204, a probability that the components included in the first conductive layer 202 will be visually recognized due to a reflection of external light may be lower than that of the second conductive layer 204, even though the thickness of the first conductive layer 202 may be increased.

At least one of the intermediate insulating layer 203 and/or the cover insulating layer 205 may include an inorganic film. The inorganic film may include at least one of aluminum oxide, titanium oxide, silicon oxide, silicon nitride, silicon oxy nitride, zirconium oxide, and/or hafnium oxide.

At least one of the intermediate insulating layer 203 and/or the cover insulating layer 205 may include an organic film. The organic film may include at least one of an acrylic resin, a methacrylic resin, a polyisoprene resin, a vinyl resin, an epoxy resin, a urethane-based resin, a celluosic resin, a siloxane-based resin, a polyimide resin, a polyamide resin, and/or a perylene-based resin.

Although it has been described that the sensor layer 200 includes the first conductive layer 202 and the second conductive layer 204, or in other words, a total of two conductive layers, the present disclosure is not particularly limited thereto. For example, the sensor layer 200 may include three or more conductive layers.

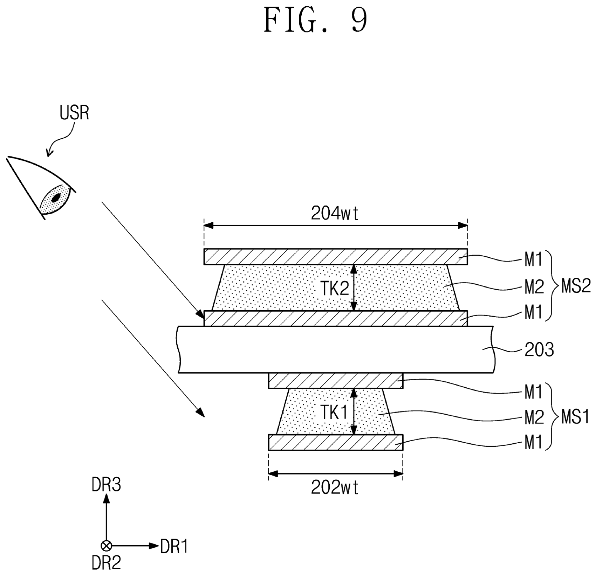

FIG. 9 is a sectional view illustrating some components of a sensor layer according to an embodiment of the present disclosure.

Referring to FIGS. 8 and 9, a second width 204wt of a second mesh line MS2 included in the second conductive layer 204 may be greater than or equal to a first width 202wt of a first mesh line MS1 included in the first conductive layer 202. When a user USR views the first mesh line MS1 and the second mesh line MS2 from the side, a probability that the first mesh line MS1 will be visually recognized by the user USR may be decreased, because the first mesh line MS1 has a smaller width than that of the second mesh line MS2.

Each of the first mesh line MS1 and the second mesh line MS2 may include first metal layers M1, and a second metal layer M2 disposed between the first metal layers M1. For example, the first metal layers M1 may include titanium (Ti), and the second metal layer M2 may include aluminum (Al). However, the present disclosure is not particularly limited thereto.

In an embodiment of the present disclosure, a first thickness TK1 of the second metal layer M2 of the first mesh line MS1 and a second thickness TK2 of the second metal layer M2 of the second mesh line MS2 may be the same or substantially the same as each other, but the present disclosure is not particularly limited thereto. For example, the first thickness TK1 may be greater than the second thickness TK2. As another example, the second thickness TK2 may be greater than the first thickness TK1. In an embodiment of the present disclosure, each of the first thickness TK1 and the second thickness TK2 may be 1000Å or more, for example, such as 6000Å.

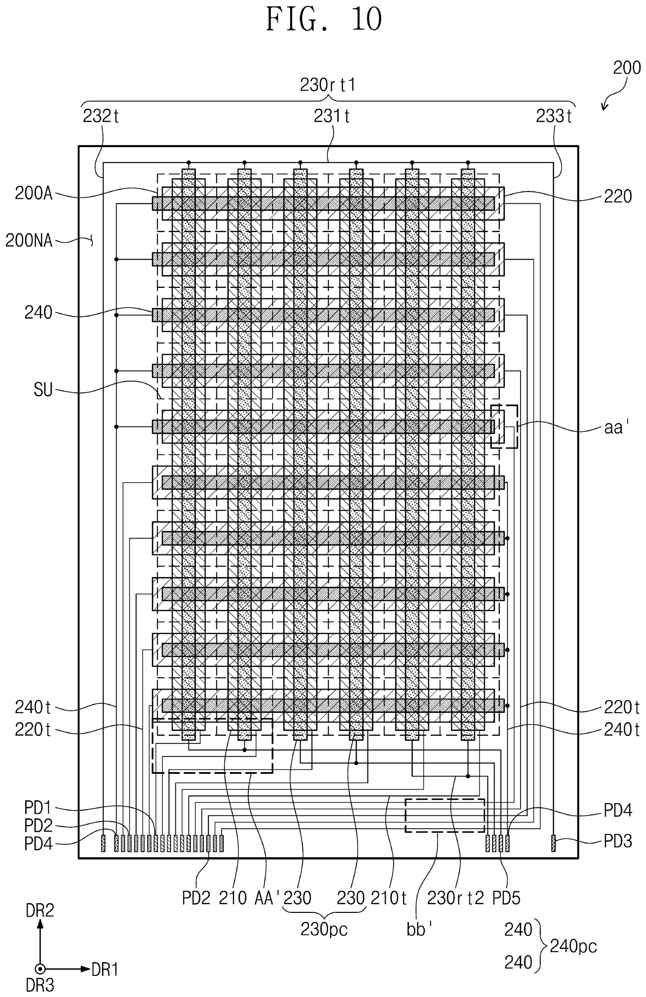

FIG. 10 is a plan view illustrating a sensor layer according to an embodiment of the present disclosure.

Referring to FIG. 10, a sensing area 200A and a peripheral area 200NA adjacent to the sensing area 200A may be defined in the sensor layer 200.

The sensor layer 200 may include a plurality of first electrodes 210, a plurality of second electrodes 220, a plurality of third electrodes 230, and a plurality of fourth electrodes 240 disposed in the sensing area 200A.

Each of the first electrodes 210 may cross the second electrodes 220. Each of the first electrodes 210 may extend in the second direction DR2, and the first electrodes 210 may be spaced apart from one another in the first direction DR1. Each of the second electrodes 220 may extend in the first direction DR1, and the second electrodes 220 may be spaced apart from one another in the second direction DR2. A sensing unit SU of the sensor layer 200 may be an area where one first electrode 210 and one second electrode 220 cross each other.

In FIG. 10, six first electrodes 210 and ten second electrodes 220 are illustrated as an example, and 60 sensing units SU are illustrated as an example. However, the number of first electrodes 210 and the number of second electrodes 220 are not limited thereto.

Each of the third electrodes 230 may extend in the second direction DR2, and the third electrodes 230 may be spaced apart from one another in the first direction DR1. One third electrode 230 may at least partially overlap with one first electrode 210. According to an embodiment of the present disclosure, a capacitance (e.g., a coupling capacitance) between one first electrode 210 and one third electrode 230 may be adjusted by adjusting the overlapping area between the one first electrode 210 and the one third electrode 230. Furthermore, the thickness and/or widths of the first electrode 210 and second electrode 230 may be selected to achieve the advantages described above with reference to Figures 8 and 9.

In an embodiment of the present disclosure, at least some of the third electrodes 230 may be connected in parallel with each other. For example, FIG. 10 illustrates an example in which two third electrodes 230 are connected in parallel with each other to constitute a first electrode group 230pc, and three first electrode groups 230pc may be arranged along the first direction DR1. However, the number of third electrodes 230 constituting the first electrode group 230pc is not limited thereto. For example, one first electrode group 230pc may include only one third electrode 230, or may include three or more third electrodes 230.

As the number of third electrodes 230 included in the first electrode group 230pc and connected in parallel with each other is increased, a resistance of the first electrode group 230pc may be lowered, and thus, a power efficiency and a sensing sensitivity may be improved. On the other hand, as the number of third electrodes 230 included in the first electrode group 230pc is decreased, a loop coil pattern formed using the first electrode group 230pc may be implemented in more diverse forms.

The fourth electrodes 240 may be arranged along the second direction DR2, and may extend in the first direction DR1. One fourth electrode 240 may at least partially overlap with one second electrode 220. According to an embodiment of the present disclosure, a capacitance (e.g., a coupling capacitance) between one second electrode 220 and one fourth electrode 240 may be adjusted by adjusting the overlapping area between the one second electrode 220 and the one fourth electrode 240.

In an embodiment of the present disclosure, at least some of the fourth electrodes 240 may be electrically connected to each other to constitute one second electrode group 240pc. For example, FIG. 10 illustrates an example in which five fourth electrodes 240 are connected to the same one trace line, for example, such as to a fourth trace line 240t, to constitute one second electrode group 240pc. Accordingly, in FIG. 10, two second electrode groups 240pc are illustrated as being arranged along the second direction DR2. However, the number of fourth electrodes 240 constituting one second electrode group 240pc is not limited thereto. For example, the number of fourth electrodes 240 constituting one second electrode group 240pc may be ten. In this case, the sensor layer 200 may include only one second electrode group 240pc.

The sensor layer 200 may further include a plurality of first trace lines 210t disposed in the peripheral area 200NA, a plurality of first pads PD1 connected to the first trace lines 210t in a one-to-one correspondence, a plurality of second trace lines 220t, and a plurality of second pads PD2 connected to the second trace lines 220t in a one-to-one correspondence. The first trace lines 210t may be electrically connected to the first electrodes 210 in a one-to-one correspondence. The second trace lines 220t may be electrically connected to the second electrodes 220 in a one-to-one correspondence.

The sensor layer 200 may further include a third trace line 230rt1 disposed in the peripheral area 200NA, a plurality of third pads PD3 connected to a first end and a second end of the third trace line 230rt1, fourth trace lines 240t, fourth pads PD4 connected to the fourth trace lines 240t in a one-to-one correspondence, fifth trace lines 230rt2, and fifth pads PD5 connected to the fifth trace lines 230rt2 in a one-to-one correspondence.

The third trace line 230rt1 may be electrically connected with the third electrodes 230. In an embodiment of the present disclosure, the third trace line 230rt1 may be electrically connected with all of the third electrodes 230. The third trace line 230rt1 may include a first line portion 231t that extends in the first direction DR1 and is electrically connected to the third electrodes 230, a second line portion 232t that extends from a first end of the first line portion 231t in the second direction DR2, and a third line portion 233t that extends from a second end of the first line portion 231t in the second direction DR2.

In an embodiment of the present disclosure, each of a resistance of the second line portion 232t and a resistance of the third line portion 233t may be the same or substantially the same as a resistance of one third electrode among the third electrodes 230. Accordingly, the second line portion 232t and the third line portion 233t may serve as the third electrodes 230, and there may be obtained the same effect as placing the third electrodes 230 in the peripheral area 200NA. For example, one of the second line portion 232t or the third line portion 233t and one of the third electrodes 230 may form a coil. Accordingly, a pen located in an area adjacent to the peripheral area 200NA may be sufficiently charged by a loop including the second line portion 232t or the third line portion 233t.

In an embodiment of the present disclosure, widths of the second line portion 232t and the third line portion 233t in the first direction DR1 may be adjusted to adjust the resistance of the second line portion 232t and the resistance of the third line portion 233t. However, the present disclosure is not limited thereto, and the first to third line portions 231t, 232t, and 233t may have the same or substantially the same width as each other.

The fifth trace lines 230rt2 may be connected to the first electrode groups 230pc in a one-to-one correspondence. In other words, the number of fifth trace lines 230rt2 may correspond to the number of first electrode groups 230pc. In FIG. 10, three fifth trace lines 230rt2 and three first electrode groups 230pc are illustrated as an example.

In an embodiment of the present disclosure, the fifth trace lines 230rt2 and the fifth pads PD5 may be omitted as needed or desired, and a charging operation mode for charging a pen may be omitted. In this case, the sensor layer 200 may sense an input by an active pen capable of emitting a magnetic field, even though a magnetic field is not provided from the sensor layer 200.

The fourth trace lines 240t may be spaced apart from each other with the sensing area 200A therebetween. The fourth trace lines 240t may be electrically connected to the second electrode groups 240pc in a one-to-one correspondence. FIG. 10 illustrates an example in which two second electrode groups 240pc are arranged. The fourth trace line 240t connected to one second electrode group 240pc and the fourth trace line 240t connected to the other second electrode group 240pc may be spaced apart from each other with the sensing area 200A therebetween. However, the present disclosure is not particularly limited thereto.

When viewed from above the plane (e.g., in a plan view), the first pads PD1 may be disposed on a first side of the sensor layer 200, and the fifth pads PD5 may be disposed on a second side of the sensor layer 200 that is spaced apart from the first side of the sensor layer 200 in the first direction DR1.

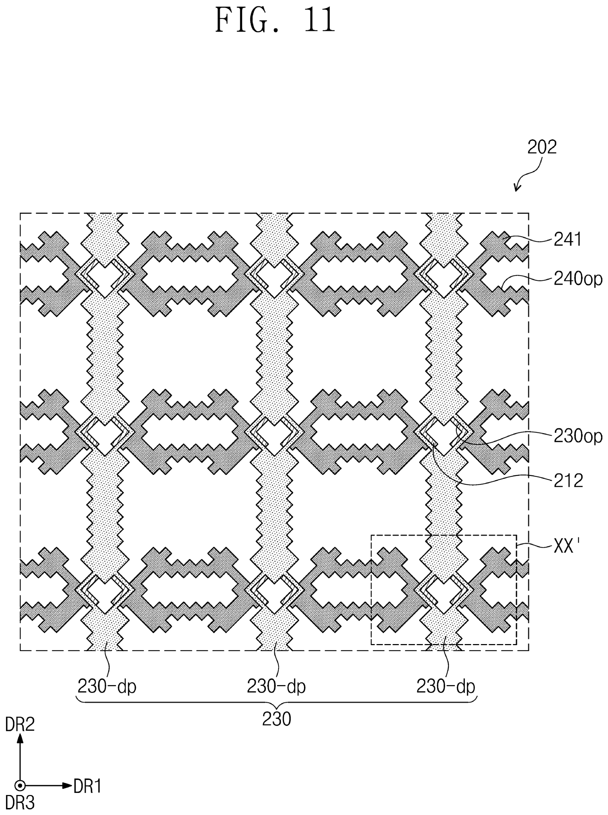

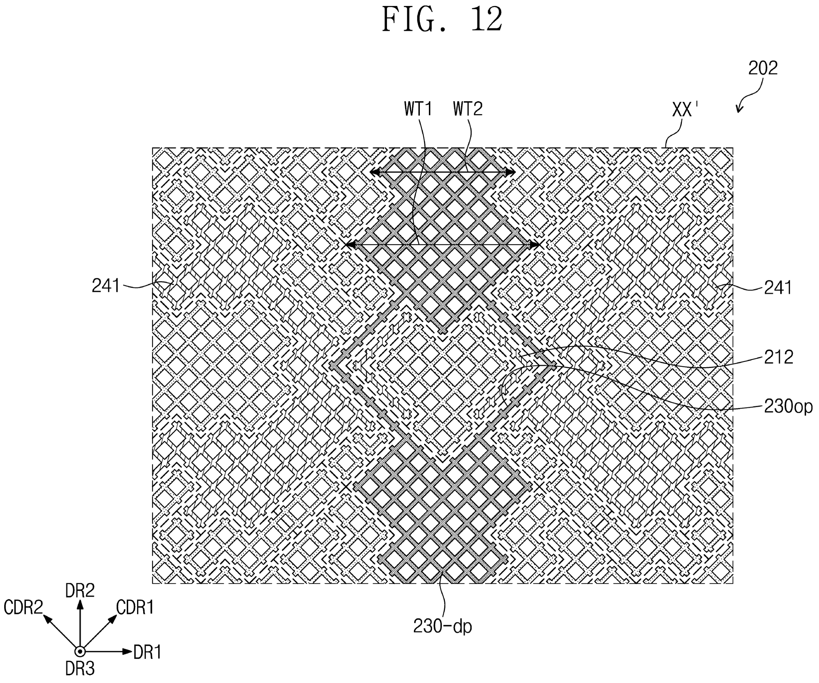

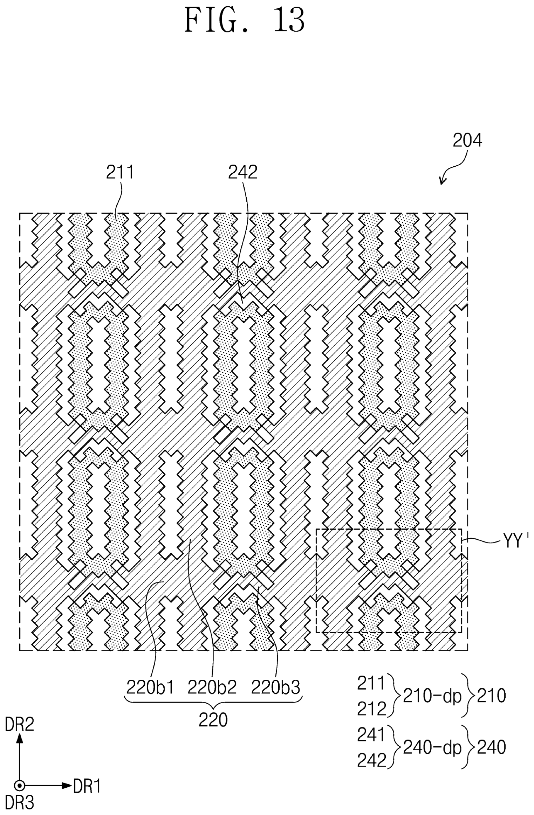

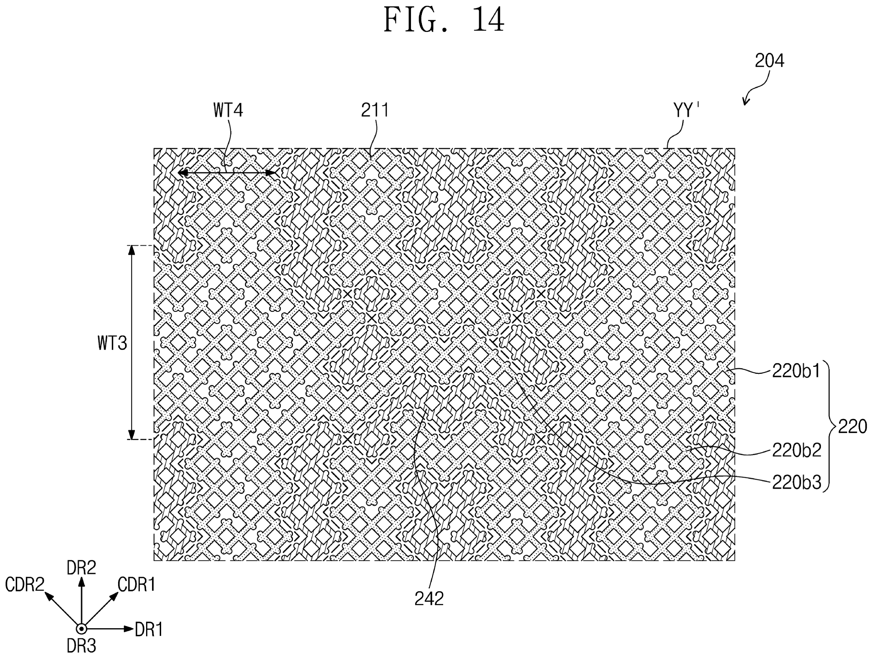

FIG. 11 is a plan view illustrating a first conductive layer of the sensing unit according to an embodiment of the present disclosure. FIG. 12 is an enlarged plan view illustrating the area XX' of FIG. 11 according to an embodiment of the present disclosure. FIG. 13 is a plan view illustrating a second conductive layer of the sensing unit according to an embodiment of the present disclosure. FIG. 14 is an enlarged plan view illustrating the area YY' of FIG. 13 according to an embodiment of the present disclosure.

In FIGS. 11 and 13, the shape of a mesh structure is not illustrated, and boundaries between components are briefly illustrated by lines. In other words, the lines illustrated in FIGS. 11 and 13 may be understood as corresponding to cutting lines that cut the mesh structures illustrated in FIGS. 12 and 14, and the cutting lines are illustrated by dotted lines in FIGS. 12 and 14.

The shape of the sensing unit SU illustrated in FIGS. 10 to 14 is shown for convenience of illustration, and the present disclosure is not limited thereto. The shape of the sensing unit SU may be variously modified as needed or desired.

Referring to FIGS. 10 to 14, the first electrode 210 may include a plurality of first divided electrodes 210-dp that are spaced apart from one another in the first direction DR1. Each of the first divided electrodes 210-dp may include a plurality of first patterns 211, and a plurality of first bridge patterns 212 electrically connected to the first patterns 211. The first patterns 211 may be referred to as sensing patterns 211.

The first patterns 211 that are spaced apart from one another in the second direction DR2 may be electrically connected to each other by the first bridge patterns 212. Accordingly, each of the first divided electrodes 210-dp may extend in the second direction DR2, and the first divided electrodes 210-dp may be spaced apart from one another in the first direction DR1.

The third electrode 230 may include a plurality of second divided electrodes 230-dp that are spaced apart from one another in the first direction DR1. Each of the second divided electrodes 230-dp may extend in the second direction DR2. The second divided electrodes 230-dp may be spaced apart from one another in the first direction DR1.

The second divided electrodes 230-dp may overlap with the first divided electrodes 210-dp in a one-to-one correspondence when viewed in the third direction DR3 (e.g., in a plan view). As used herein, the term "overlap" includes the meaning that at least a portion of one first divided electrode 210-dp and at least a portion of one second divided electrode 230-dp overlap with each other.

Although FIGS. 11 and 13 illustrate an example in which three first divided electrodes 210-dp and three second divided electrodes 230-dp are included in one sensing unit SU, the present disclosure is not particularly limited thereto. For example, the numbers of first divided electrodes 210-dp and second divided electrodes 230-dp included in one sensing unit SU may be one, two, or four or more. Each of the first divided electrodes 210-dp and the second divided electrodes 230-dp may correspond to a signal transmission path or a resistance path along which a signal is transferred.

One fifth trace line 230rt2 is electrically connected to one first electrode group 230pc. The one first electrode group 230pc may include two third electrodes 230. In this case, the one fifth trace line 230rt2 may be electrically connected to six second divided electrodes 230-dp. In this case, a degree to which the number of pads in the sensor layer 200 is increased may be decreased.

As compared with when the first electrode 210 in one sensing unit SU has a single shape without being divided, when the first electrode 210 in one sensing unit SU includes the first divided electrodes 210-dp, the first divided electrodes 210-dp may be relatively evenly distributed in one sensing unit SU. In this case, in one sensing unit SU, signals may be evenly provided, or signals may be evenly sensed.

In addition, as compared with when the first electrode 210 in one sensing unit SU is not divided, when the first electrode 210 in one sensing unit SU includes the first divided electrodes 210-dp, the number of first bridge patterns 212 in one sensing unit SU may be increased. When two first bridge patterns 212 connected to two identical first patterns 211 are considered as a pair, FIG. 11 illustrates an example in which nine pairs of first bridge patterns 212 are disposed. In other words, a total of 18 first bridge patterns 212 are illustrated.

In more detail, an increase in the number of first bridge patterns 212 arranged in the first direction DR1 crossing the second direction DR2 that is the extension direction of the first electrode 210 may correspond to an increase in the number of signal paths. Accordingly, as the number of signal paths is increased, a resistance of the first electrode 210 may be decreased. As a result, the sensing sensitivity of the sensor layer 200 may be improved.

In addition, the shape of each of the first divided electrodes 210-dp may be close to (e.g., similar to) a bar shape extending in the second direction DR2, and as the shape is close to a bar shape, a resistance path may be shortened. Accordingly, when the resistance path is shortened and the number of resistance paths connected in parallel with each other in one first electrode 210 is increased, the resistance of the first electrode 210 may be decreased. As a result, the sensing sensitivity of the sensor layer 200 may be improved.

As the shape of each of the first divided electrodes 210-dp is close to a bar shape extending in the second direction DR2, a proportion of an area available for a pattern design in the total area of one sensing unit SU may be increased. Accordingly, a degree of freedom in a pattern design may be improved.

According to an embodiment of the present disclosure, the degree of freedom in a pattern design of the sensing unit SU may be improved, and the resistance of the electrode included in the sensing unit SU may be decreased. In this case, it may be more advantageous to secure a frequency range (e.g., a bandwidth) applicable to a signal provided to the sensor layer 200. Accordingly, the degree of freedom in a frequency selection may be improved.

According to an embodiment of the present disclosure, each of the first patterns 211 may have a ring shape, and portions of each of the second divided electrodes 230-dp that overlap with the first patterns 211 may be close to (e.g., similar to) a bar shape. In this case, the overlapping area between the first electrode 210 and the third electrode 230 may be easily adjusted by adjusting the size of the inner diameter of each of the first patterns 211 or the width of each of the second divided electrodes 230-dp.

According to an embodiment of the present disclosure, the first divided electrode 210-dp may include the first patterns 211 and the first bridge patterns 212 disposed at (e.g., in or on) different layers from each other, and the first patterns 211 and the first bridge patterns 212 may be electrically connected to each other through a contact. In this case, a resistance may be relatively increased, as compared with when the first patterns 211 and the first bridge patterns 212 are integrally provided together at (e.g., in or on) the same layer as each other.

In an embodiment of the present disclosure, a resistance of a portion of the second divided electrode 230-dp overlapping with the first pattern 211 may be lower than a resistance of the first pattern 211. However, the present disclosure is not limited thereto, and a resistance relationship may be changed depending on the width of the ring of the first pattern 211 or the width of a portion of the second divided electrode 230-dp.

The second divided electrode 230-dp may extend in the second direction DR2 in the same layer. Accordingly, there may be no increase in a resistance due to a layer change in the second divided electrode 230-dp. The second divided electrode 230-dp may be an electrode to which a signal is applied in a charge operation mode to be described in more detail below. Accordingly, as the resistance of the second divided electrode 230-dp is lowered, intensities of a current and a magnetic field for charging the resonant circuit of the pen PN (e.g., refer to FIG. 7) may be strengthened.

According to an embodiment of the present disclosure, because the portions of each of the second divided electrodes 230-dp that overlap with the first patterns 211 are close to (e.g., similar to) a bar shape, the second divided electrode 230-dp may have a shape that is relatively narrower than that of the first divided electrode 210-dp. In this case, a parasitic capacitance that may be caused in each of the second divided electrodes 230-dp may be decreased. Thus, the performance of the sensor layer 200 may be improved.

The second divided electrode 230-dp may include a first portion having a first width WT1 in the first direction DR1, and a second portion having a second width WT2 in the first direction DR1. The first width WT1 may be greater than the second width WT2. For example, the first portion having the first width WT1 may be closer to the first bridge patterns 212 than the second portion having the second width WT2.

When viewed from above the plane (e.g., in a plan view), the first portion having the first width WT1 may overlap with the first patterns 211 to form a capacitance. In addition, the second portion having the second width WT2 may overlap with a dummy pattern surrounded (e.g., around a periphery thereof) by the first patterns 211. The overlapping area between the first electrode 210 and the third electrode 230 may be easily adjusted by adjusting the second width WT2.

An opening 230op may be defined in the second divided electrode 230-dp, and two first bridge patterns 212 may be disposed in the opening 230op. When the first bridge patterns 212 are surrounded (e.g., around peripheries thereof) by the second divided electrode 230-dp, capacitances having a value changed depending on a temperature among capacitances generated in the first electrode 210 may be decreased. Accordingly, the temperature characteristics of the sensor layer 200 may be improved.

The second electrode 220 may include a plurality of first branch portions 220b1 extending in the first direction DR1, a plurality of second branch portions 220b2 extending in the second direction DR2 crossing the first direction DR1, and a connecting portion 220b3 disposed between the first patterns 211. The first branch portions 220b1 may be spaced apart from each other in the second direction DR2, and the second branch portions 220b2 may be spaced apart from each other in the first direction DR1. The first branch portions 220b1, the second branch portions 220b2, and the connecting portion 220b3 may be connected together, and may have a one-body shape.

The fourth electrode 240 may include a plurality of third divided electrodes 240-dp spaced apart from one another in the second direction DR2. Each of the third divided electrodes 240-dp may extend in the first direction DR1. Each of the third divided electrodes 240-dp may include a plurality of second patterns 241, and a plurality of second bridge patterns 242 electrically connected to the second patterns 241. Each of the second patterns 241 may have a ring shape. The second patterns 241 and the second bridge patterns 242 may be electrically connected with each other through contact holes defined in the intermediate insulating layer 203 (e.g., refer to FIG. 8). Two second patterns 241 adjacent to each other may be spaced apart from each other with one second divided electrode 230-dp and two first bridge patterns 212 therebetween.

In an embodiment of the present disclosure, the third width WT3 of the first branch portions 220b1 in the second direction DR2 may be greater than the fourth width WT4 of the second branch portions 220b2 in the first direction DR1. For example, the first branch portions 220b1 may overlap with the second patterns 241 and a dummy pattern surrounded (e.g., around a periphery thereof) by the second patterns 241. The overlapping area between the second electrode 220 and the fourth electrode 240 may be easily adjusted by adjusting the third width WT3. As another example, the overlapping area between the second electrode 220 and the fourth electrode 240 may be easily adjusted by adjusting the size of the inner diameter of the ring shape surrounding (e.g., around a periphery of) the dummy pattern of each of the second patterns 241.

In an embodiment of the present disclosure, each of the third divided electrodes 240-dp may include the second patterns 241 and the second bridge patterns 242 disposed at (e.g., in or on) different layers from each other, and the second patterns 241 and the second bridge patterns 242 may be electrically connected to each other through a contact. In this case, a resistance may be relatively increased, as compared with when the second patterns 241 and the second bridge patterns 242 are integrally provided together at (e.g., in or on) the same layer as each other.

In an embodiment of the present disclosure, the third electrode 230 corresponds to a component that transfers a signal when a touch and a pen are sensed, and the fourth electrode 240 corresponds to a component that forms a capacitance with the third electrode 230 when a pen is sensed. Therefore, it may be more appropriate to decrease the resistance of the third electrode 230 than to decrease the resistance of the fourth electrode 240. Accordingly, the third electrode 230 may be implemented with one layer (e.g., one identical layer), and the fourth electrode 240 may be implemented with two layers (e.g., two different layers).

The second bridge pattern 242 may include only one line extending in a first crossing direction CDR1 or a second crossing direction CDR2 in a partial section. In this case, the first bridge pattern 212 overlapping with the second bridge pattern 242 in the partial section may be insulated from the second bridge pattern 242, and may cross the second bridge pattern 242. In this case, a capacitance between the first bridge pattern 212 and the second bridge pattern 242 may be minimized or reduced.

The second divided electrodes 230-dp, the second patterns 241, the first patterns 211, the second electrode 220, and the second bridge patterns 242 may each have a mesh structure. Such a mesh structure may include a plurality of mesh lines. Each of the plurality of mesh lines may have a shape extending in a suitable direction (e.g., a certain or predetermined direction), and the plurality of mesh lines may be connected together, for example to form a single electrically connected and contiguous electrode. The shape may have various suitable shapes, such as a straight line, a line with protrusions, and/or an uneven line. Openings at least partially surrounded (e.g., around peripheries thereof) by the mesh lines may be defined (e.g., may be provided or formed) in the mesh structure. The openings may overlap with the emissive area PXA (e.g., refer to FIG. 8), and the mesh lines may overlap with the non-emissive area NPXA. However, the present disclosure is not particularly limited thereto.

FIGS. 12 and 14 illustrate an example in which the mesh structure includes mesh lines extending in the first crossing direction CDR1 that crosses the first direction DR1 and the second direction DR2, and mesh lines extending in the second crossing direction CDR2 crossing the first crossing direction CDR1. However, the extension directions of the mesh lines constituting the mesh structure are not particularly limited to those illustrated in FIGS. 12 and 14. For example, the mesh structure may include only mesh lines extending in the first direction DR1 and the second direction DR2, or may include mesh lines extending in the first direction DR1, the second direction DR2, the first crossing direction CDR1, and the second crossing direction CDR2. In other words, the mesh structure may be variously modified into various suitable shapes and/or other directions as needed or desired.

In an embodiment of the present disclosure, a first capacitance may be defined between the first electrode 210 and the third electrode 230, and a second capacitance may be defined between the second electrode 220 and the fourth electrode 240. The magnitude of the first capacitance and the magnitude of the second capacitance may be adjusted by the overlapping area between the first electrode 210 and the third electrode 230 and the overlapping area between the second electrode 220 and the fourth electrode 240.

As the first capacitance and the second capacitance are increased, an amount of an induced current transferred from the third electrode 230 to the first electrode 210 may be increased, and an amount of an induced current transferred from the fourth electrode 240 to the second electrode 220 may be increased. Accordingly, the pen sensing performance of the sensor layer 200 may be improved as the first capacitance and the second capacitance are increased. In addition, the first capacitance and the second capacitance may act as loads during a touch sensing. Accordingly, the touch sensing performance may be improved as the first capacitance and the second capacitance are decreased.

According to an embodiment of the present disclosure, the overlapping area between the first electrode 210 and the third electrode 230 and the overlapping area between the second electrode 220 and the fourth electrode 240 may be easily adjusted. Accordingly, the sensor layer 200 having appropriate levels of capacitances considering a touch sensitivity and a pen sensing sensitivity may be provided. As a result, the electronic device ED (e.g., refer to FIG. 1) with improved pen sensitivity and touch sensitivity may be provided.

In an embodiment of the present disclosure, in the second conductive layer 204 within one sensing unit SU, the area occupied by the components included in the first electrode 210 and the second electrode 220 may be greater than the area occupied by the components included in the third electrode 230 and the fourth electrode 240. A change in a capacitance due to the first input 2000 (e.g., refer to FIG. 7) may be increased as the distance is decreased. Accordingly, a component for sensing the first input 2000 (e.g., refer to FIG. 7) may be disposed in a larger area in a layer that is relatively adjacent to (e.g., closer to) the surface of the electronic device ED (e.g., refer to FIG. 1). As a result, a touch performance may be improved.

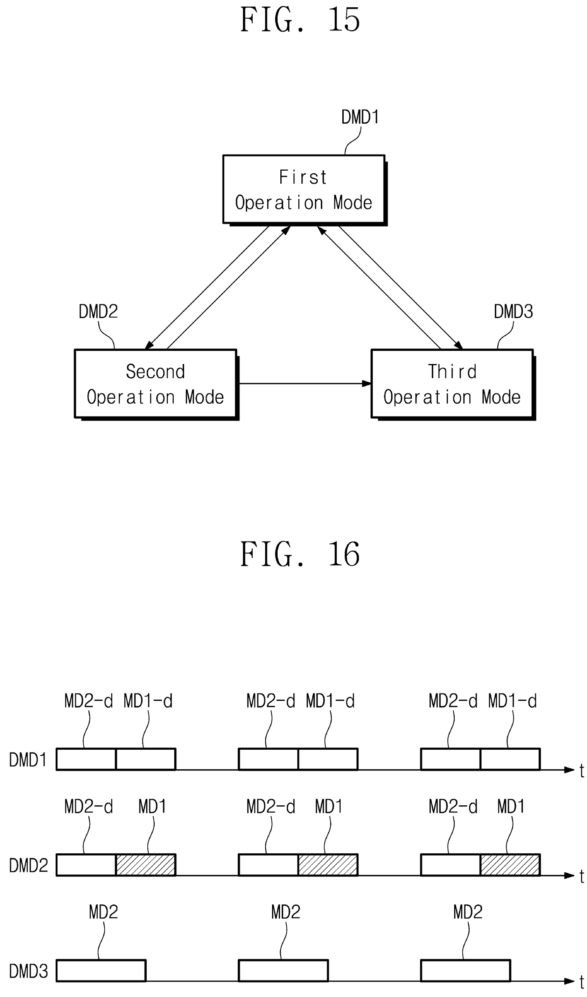

FIG. 15 is a schematic view illustrating an operation of a sensor driver according to an embodiment of the present disclosure. FIG. 16 is a schematic view illustrating an operation of the sensor driver according to an embodiment of the present disclosure.

Referring to FIGS. 7, 15, and 16, the sensor driver 200C may selectively operate in one of a first operation mode DMD1, a second operation mode DMD2, and a third operation mode DMD3.

The first operation mode DMD1 may be referred to as a touch and pen standby mode, the second operation mode DMD2 may be referred to as a touch activation and pen standby mode, and the third operation mode DMD3 may be referred to as a pen activation mode. The first operation mode DMD1 may be a mode for waiting for the first input 2000 and the second input 3000. The second operation mode DMD2 may be a mode for sensing the first input 2000 and waiting for the second input 3000. The third operation mode DMD3 may be a mode for sensing the second input 3000.

In an embodiment of the present disclosure, the sensor driver 200C may first operate in the first operation mode DMD1. When the first input 2000 is sensed in the first operation mode DMD1, the sensor driver 200C may be switched (e.g., changed) to the second operation mode DMD2. As another example, when the second input 3000 is sensed in the first operation mode DMD1, the sensor driver 200C may be switched (e.g., changed) to the third operation mode DMD3.

In an embodiment of the present disclosure, when the second input 3000 is sensed in the second operation mode DMD2, the sensor driver 200C may be switched to the third operation mode DMD3. When the first input 2000 is released (e.g., not sensed) in the second operation mode DMD2, the sensor driver 200C may be switched to the first operation mode DMD1. When the second input 3000 is released (e.g., not sensed) in the third operation mode DMD3, the sensor driver 200C may be switched to the first operation mode DMD1.

Operations in the first to third operation modes DMD1, DMD2, and DMD3 are illustrated in order of time t.

In the first operation mode DMD1, the sensor driver 200C may repeatedly operate in a second mode MD2-d and a first mode MD1-d. During the second mode MD2-d, the sensor layer 200 may be scan driven to detect the second input 3000. During the first mode MD1-d, the sensor layer 200 may be scan driven to detect the first input 2000. Although FIG. 16 illustrates an example in which the sensor driver 200C operates in the first mode MD1-d sequentially after the second mode MD2-d, the sequence is not limited thereto.

In the second operation mode DMD2, the sensor driver 200C may repeatedly operate in a second mode MD2-d and a first mode MD1. During the second mode MD2-d, the sensor layer 200 may be scan driven to detect the second input 3000. During the first mode MD1, the sensor layer 200 may be scan driven to detect the coordinates by the first input 2000.

In the third operation mode DMD3, the sensor driver 200C may operate in a second mode MD2. During the second mode MD2, the sensor layer 200 may be scan driven to detect the coordinates by the second input 3000. In the third operation mode DMD3, the sensor driver 200C may not operate in the first mode MD1-d or MD1 until the second input 3000 is released (e.g., not sensed).

In the first mode MD1-d and the first mode MD1, both the third electrodes 230 and the fourth electrodes 240 may be grounded, or may receive a constant voltage. As another example, in the first mode MD1-d and the first mode MD1, both the third electrodes 230 and the fourth electrodes 240 may be floated (e.g., electrically floated). As another example, in the first mode MD1-d and the first mode MD1, a signal having the same phase as that of a transmission signal provided to the first electrodes 210 may be applied to the third electrodes 230 and the fourth electrodes 240. In this case, introduction of a touch noise through the third electrodes 230 and the fourth electrodes 240 may be prevented or substantially prevented.

In the second mode MD2-d and the second mode MD2, first ends of the third electrodes 230 and the fourth electrodes 240 may all be floated. In addition, in the second mode MD2-d and the second mode MD2, second ends of the third electrodes 230 and the fourth electrodes 240 may all be grounded or floated. Accordingly, a compensation for a sensing signal may be maximized or increased by a coupling between the first electrodes 210 and the third electrodes 230 and a coupling between the second electrodes 220 and the fourth electrodes 240.

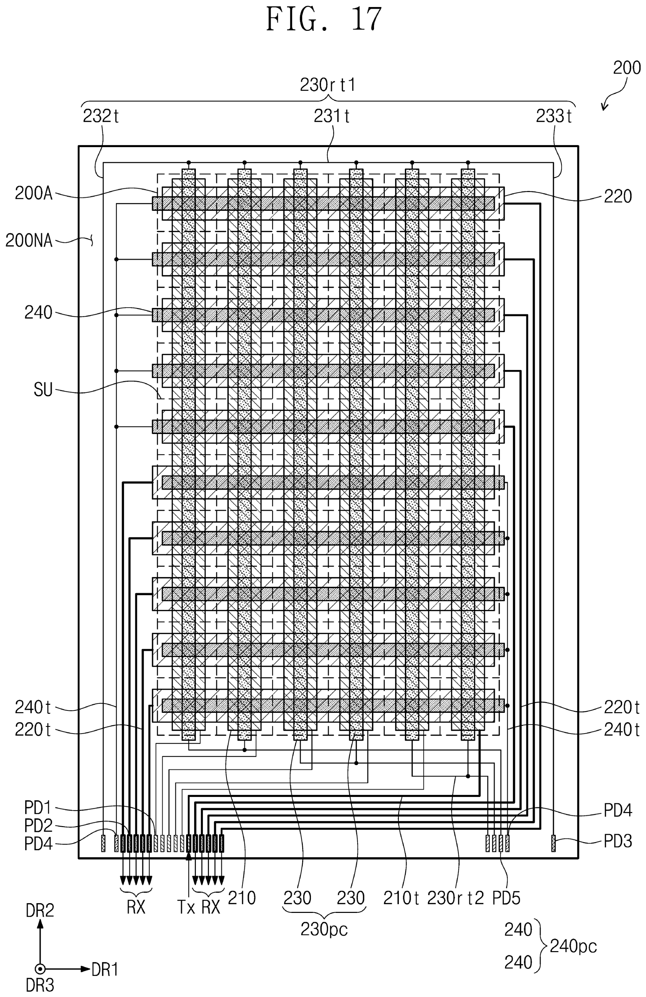

FIG. 17 is a plan view illustrating a first mode according to an embodiment of the present disclosure.

Referring to FIGS. 7, 16, and 17, the first mode MD1-d of the first operation mode DMD1 and the first mode MD1 of the second operation mode DMD2 may include a mutual capacitance detection mode. FIG. 17 is a view illustrating the mutual capacitance detection mode in the first mode MD1-d of the first operation mode DMD1 and the first mode MD1 of the second operation mode DMD2.

In the mutual capacitance detection mode, the sensor driver 200C may sequentially provide a transmission signal TX to the first electrodes 210, and may detect the coordinates of the first input 2000 using a reception signal RX detected through the second electrodes 220. For example, the sensor driver 200C may calculate the input coordinates by sensing a change in a mutual capacitance between the first electrodes 210 and the second electrodes 220.

FIG. 17 illustrates an example in which the transmission signal TX is provided to one first electrode 210, and the reception signal RX is output from the second electrodes 220. To illustrate a representation of the signal, one first electrode 210 to which the transmission signal TX is provided is displayed to be darkened in FIG. 17. The sensor driver 200C may detect the input coordinates of the first input 2000 by sensing a change in a capacitance between the first electrode 210 and each of the second electrodes 220.

In an embodiment of the present disclosure, at least one of the first mode MD1-d of the first operation mode DMD1 and/or the first mode MD1 of the second operation mode DMD2 may further include a self-capacitance detection mode. In the self-capacitance detection mode, the sensor driver 200C may calculate input coordinates by outputting driving signals to the first electrodes 210 and the second electrodes 220, and sensing a change in the capacitance of each of the first electrodes 210 and the second electrodes 220.

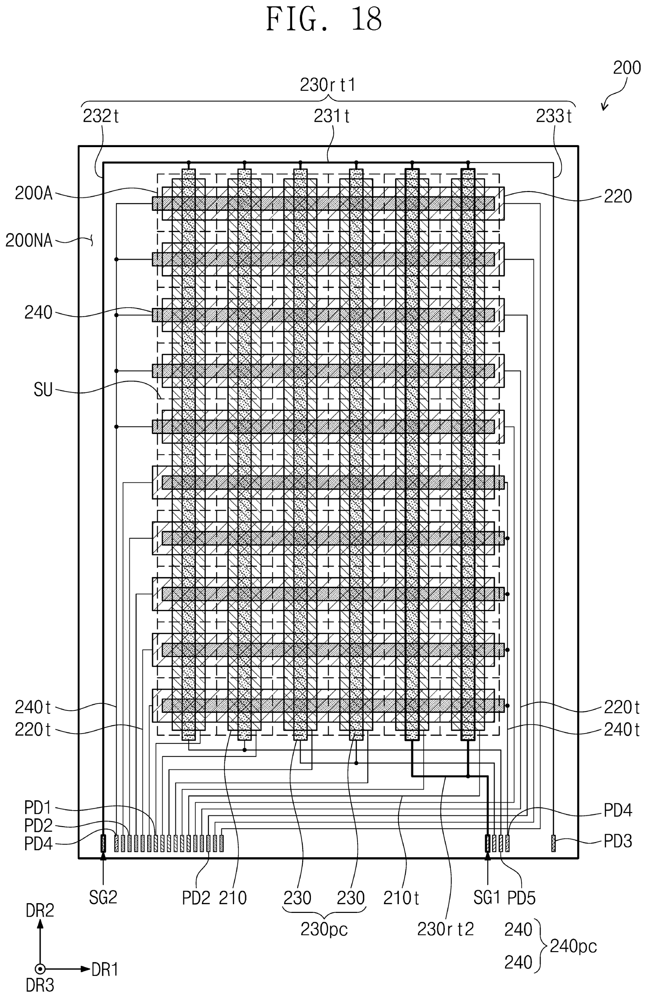

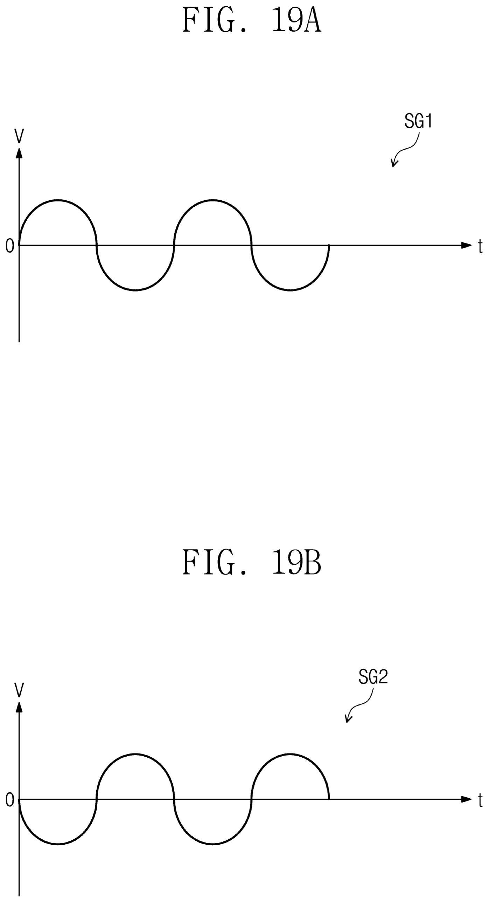

FIG. 18 is a plan view illustrating a second mode, such as a charging operation mode, according to an embodiment of the present disclosure. FIG. 19A is a graph depicting a waveform of a first signal according to an embodiment of the present disclosure. FIG. 19B is a graph depicting a waveform of a second signal according to an embodiment of the present disclosure.

Referring to FIGS. 18, 19A, and 19B, the second mode MD2 may include the charging operation mode. The charging operation mode may include a searching charging operation mode and a tracking charging operation mode.

The searching charging operation mode may be an operation mode before a position of the pen is sensed. Accordingly, the first signal SG1 or the second signal SG2 may be sequentially provided to all channels included in the sensor layer 200. In other words, in the searching charging operation mode, the whole area of the sensor layer 200 may be sequentially scanned. When the pen PN is sensed in the searching charging operation mode, the sensor layer 200 may be driven in the tracking charging operation mode. For example, in the tracking charging operation mode, the sensor driver 200C may sequentially output the first signal SG1 and the second signal SG2 to an area overlapping with a point where the pen PN is sensed, rather than to the whole sensor layer 200.

In the charging operation mode, the sensor driver 200C may apply the first signal SG1 to one pad among the third pads PD3 and the fifth pads PD5, and may apply the second signal SG2 to another pad. The second signal SG2 may be an inverse signal of the first signal SG1. For example, the first signal SG1 may be a sinusoidal signal.

Because the first signal SG1 and the second signal SG2 are applied to at least two pads, a current RFS may have a current path to flow through one pad to another pad. In addition, because the first signal SG1 and the second signal SG2 are sinusoidal signals having an inverse phase relationship with each other, the direction of the current RFS may be periodically varied. In an embodiment of the present disclosure, the first signal SG1 and the second signal SG2 may be square-wave signals having an inverse phase relationship with each other.

When the first signal SG1 and the second signal SG2 have an inverse phase relationship with each other, a noise caused in the display layer 100 (e.g., refer to FIG. 6) by the first signal SG1 may be canceled out by a noise caused by the second signal SG2. Accordingly, a flicker phenomenon may not occur in the display layer 100 (e.g., refer to FIG. 6), and the display quality of the display layer 100 may be improved.

In an embodiment of the present disclosure, the first signal SG1 may be a sinusoidal signal. However, the present disclosure is not limited thereto, the first signal SG1 may be a square-wave signal. The second signal SG2 may have a suitable constant voltage (e.g., a predetermined constant voltage). For example, the second signal SG2 may be a ground voltage. In other words, a pad to which the second signal SG2 is applied may be regarded as being grounded. Even in this case, the current RFS may flow from one pad to another pad. In addition, even though the other pad is grounded, the direction of the current RFS may be periodically varied because the first signal SG1 is a sinusoidal signal or a square-wave signal.

FIG. 18 illustrates an example in which the second signal SG2 is provided to one third pad PD3 connected with one third trace line 230rt1, and the first signal SG1 is provided to one fifth pad PD5 connected with the third electrode 230. The current RFS may flow along a current path defined by the fifth pad PD5, the fifth trace line 230rt2 connected to the fifth pad PD5, the third electrode 230, a portion of the third trace line 230rt1 connected to the third pad PD3, and the third pad PD3. The current path may have a coil shape. Accordingly, in the charging operation mode of the second mode, the resonance circuit of the pen PN may be charged by the current path.

According to some embodiments of the present disclosure, a current path having a loop coil pattern may be implemented by the components included in the sensor layer 200. Accordingly, the electronic device ED (e.g., refer to FIG. 1) may charge the pen PN using the sensor layer 200. Thus, a component having a coil for charging the pen PN may not be separately added, so that an increase in the thickness and the weight of the electronic device ED and a reduction in the flexibility of the electronic device ED due to the addition of the separate component may not occur.

In the charging operation mode, the first electrodes 210, the second electrodes 220, and the fourth electrodes 240 may be grounded or electrically floated, or may receive a constant voltage. In more detail, the first electrodes 210, the second electrodes 220, and the fourth electrodes 240 may be floated. In this case, the current RFS may not flow to the first electrodes 210, the second electrodes 220, and the fourth electrodes 240.

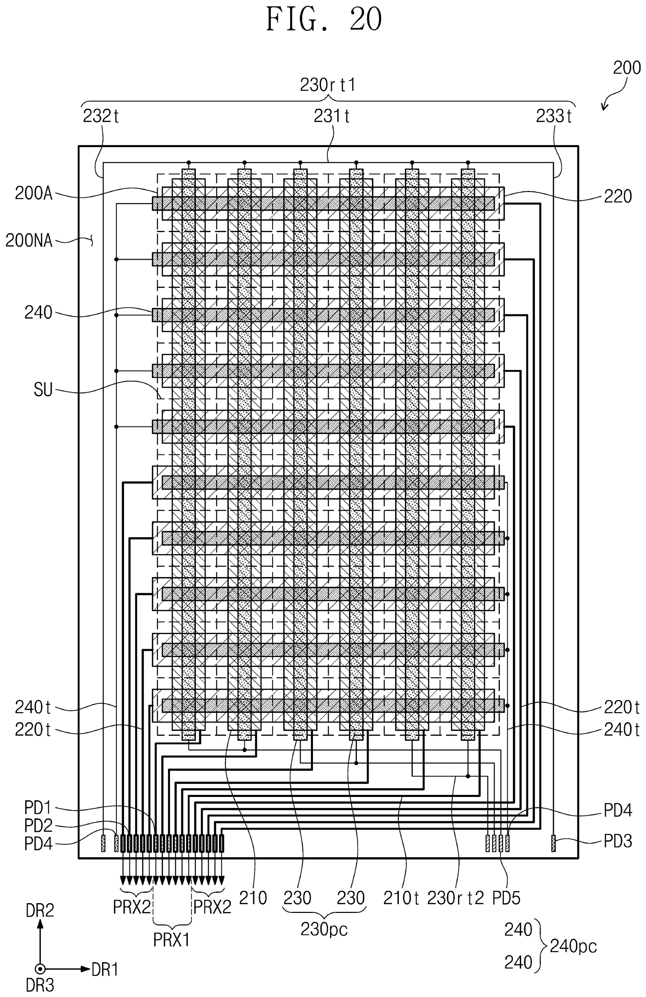

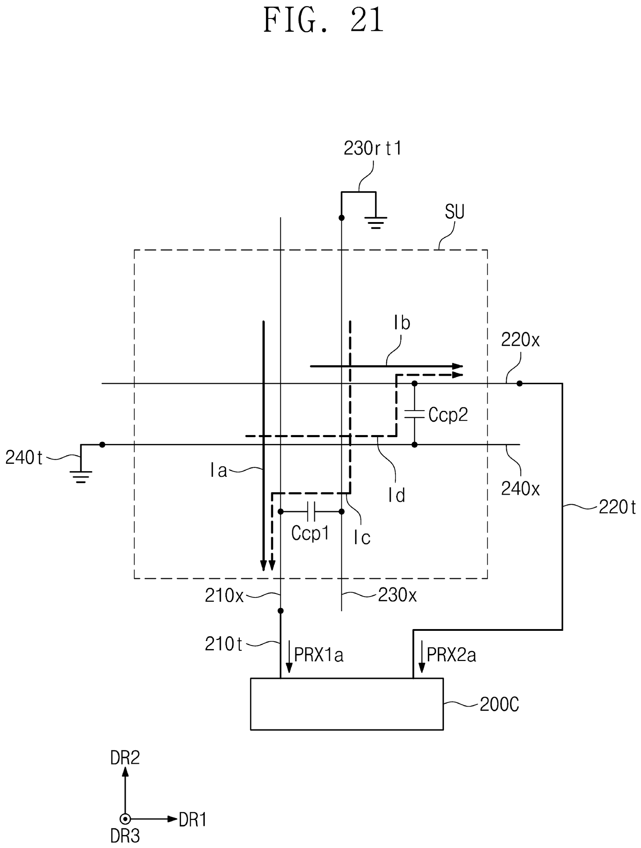

FIG. 20 is a plan view illustrating a second mode according to an embodiment of the present disclosure. FIG. 21 is a view illustrating the second mode based on one sensing unit according to an embodiment of the present disclosure.

Referring to FIGS. 7, 20, and 21, the second mode may include a charging operation mode and a pen sensing operation mode. FIGS. 20 and 21 are views illustrating the pen sensing operation mode. In FIG. 21, one sensing unit SU through which first to fourth induced currents Ia, Ib, Ic, and Id generated by the pen PN flow is illustrated.

In an embodiment of the present disclosure, the routing directions of one electrode and another electrode of the sensor layer 200 that overlap with each other may be different from each other. For example, the routing direction of a first electrode 210x and the routing direction of a third electrode 230x may be different from each other. In addition, the routing direction of a second electrode 220x and the routing direction of a fourth electrode 240x may be different from each other. For example, in FIG. 21, the first electrode 210x and the first trace line 210t may be connected with each other on the lower side of the sensing unit SU, and the third electrode 230x and the third trace line 230rt1 may be connected with each other on the upper side of the sensing unit SU. The second electrode 220x and the second trace line 220t may be connected with each other on the right side of the sensing unit SU, and the fourth electrode 240x and the fourth trace line 240t may be connected with each other on the left side of the sensing unit SU.

The RLC resonance circuit of the pen PN may emit a magnetic field having a resonant frequency while discharging charged charges. Due to the magnetic field provided by the pen PN, the first induced current Ia may be generated in the first electrode 210x, and the second induced current Ib may be generated in the second electrode 220x. In addition, the third induced current Ic may be generated in the third electrode 230x, and the fourth induced current Id may be generated in the fourth electrode 240x.

A first coupling capacitance Ccp1 may be formed between the third electrode 230x and the first electrode 210x, and a second coupling capacitance Ccp2 may be formed between the fourth electrode 240x and the second electrode 220x. The third induced current Ic may be transferred to the first electrode 210x through the first coupling capacitance Ccp1, and the fourth induced current Id may be transferred to the second electrode 220x through the second coupling capacitance Ccp2.

The sensor driver 200c may receive a first reception signal PRX1a based on the first induced current Ia and the third induced current Ic from the first electrode 210x, and may receive a second reception signal PRX2a based on the second induced current Ib and the fourth induced current Id from the second electrode 220x. The sensor driver 200C may detect the input coordinates of the pen PN based on the first reception signal PRX1a and the second reception signal PRX2a.

The sensor driver 200C may receive the first reception signal PRX1a from the first electrode 210x, and may receive the second reception signal PRX2a from the second electrode 220x. In this case, first ends of the third electrode 230x and the fourth electrode 240x may all be floated. Accordingly, a compensation for a sensing signal may be maximized or increased by the coupling between the first electrode 210x and the third electrode 230x and the coupling between the second electrode 220x and the fourth electrode 240x.

In addition, second ends of the third electrode 230x and the fourth electrode 240x may be grounded or floated. Accordingly, the third induced current Ic and the fourth induced current Id may be sufficiently transferred to the first electrode 210x and the second electrode 220x by the coupling between the first electrode 210x and the third electrode 230x and the coupling between the second electrode 220x and the fourth electrode 240x.

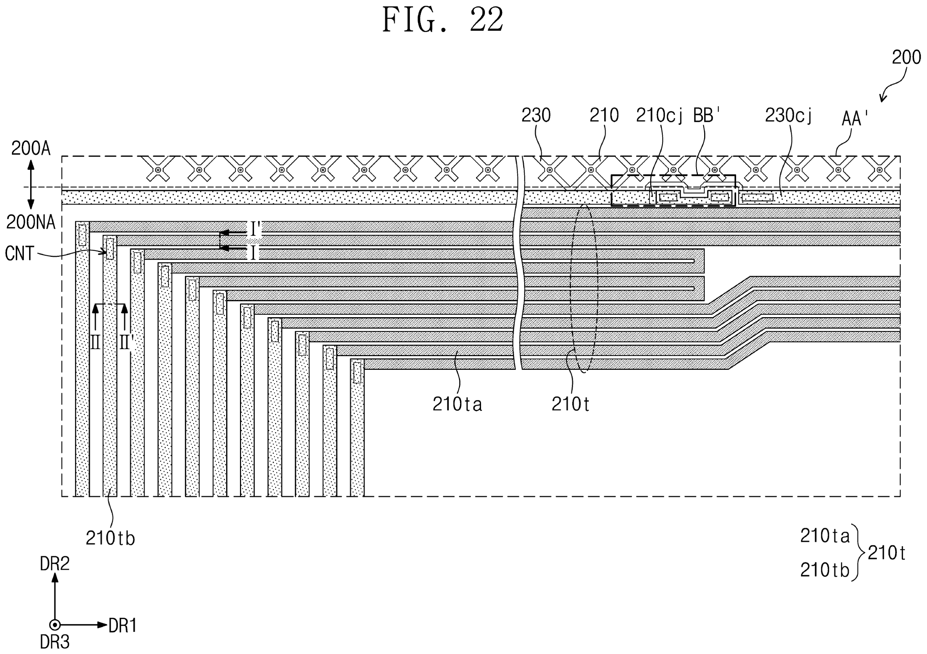

FIG. 22 is an enlarged plan view illustrating the area AA' of FIG. 10 according to an embodiment of the present disclosure.

Referring to FIGS. 10 and 22, the first electrodes 210 may be disposed in the sensing area 200A. The third electrodes 230 may be disposed in the sensing area 200A.

The first electrodes 210 and the third electrodes 230 may overlap with each other when viewed from above the plane (e.g., in a plan view).

The sensor layer 200 may further include a first connection line 210cj electrically connected with a corresponding one of the first electrodes 210, and a second connection line 230cj electrically connected with a corresponding one of the third electrodes 230.

The first connection line 210cj and the second connection line 230cj may be disposed in the peripheral area 200NA.

The first connection line 210cj may be connected with the first trace line 210t. The first trace line 210t may be disposed in the peripheral area 200NA.

The second connection line 230cj may be connected with the fifth trace line 230rt2. The second connection line 230cj may be disposed in the peripheral area 200NA.

The first trace line 210t may include a first-first portion 210ta and a first-second portion 210tb.

The first-first portion 210ta may extend in the first direction DR1. The first-first portion 210ta may be disposed as a single layer. However, the present disclosure is not limited thereto, and the arrangement configuration of the first-first portion 210ta may be variously modified as needed or desired. For example, the first-first portion 210ta may be disposed as multiple layers.

The first-second portion 210tb may extend from the first-first portion 210ta in the second direction DR2. The first-second portion 210tb may be connected between the first-first portion 210ta and the first pad PD1. The first-second portion 210tb may be disposed as multiple layers.

The first-second portion 210tb may be connected with the first-first portion 210ta through a contact hole CNT.

The fifth trace line 230rt2 may also have the same or substantially the same configuration as that of the first trace line 210t.

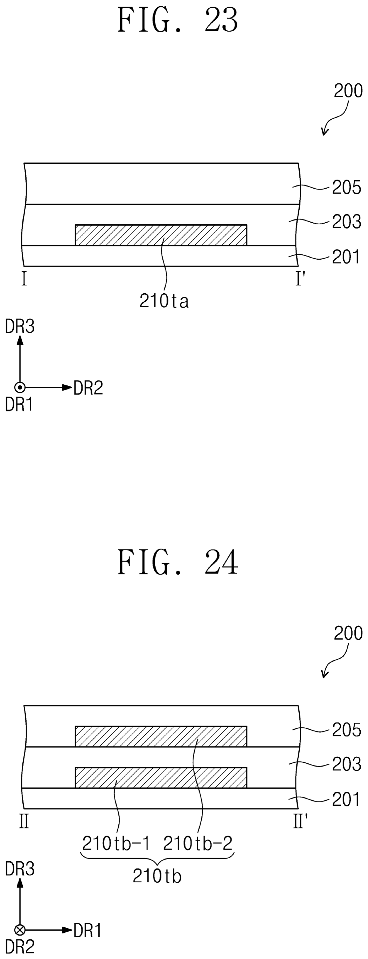

FIG. 23 is a sectional view of the sensor layer taken along the line I-I' of FIG. 22 according to an embodiment of the present disclosure.

Referring to FIGS. 8, 22, and 23, the first-first portion 210ta may be disposed in the first conductive layer 202. However, the present disclosure is not limited thereto, and the arrangement of the first-first portion 210ta may be variously modified as needed or desired. For example, the first-first portion 210ta may be disposed in the second conductive layer 204.

The first-first portion 210ta may be disposed on the base layer 201. The intermediate insulating layer 203 may cover the first-first portion 210ta.

According to some embodiments of the present disclosure, when viewed from above the plane (e.g., in a plan view), resistances of the plurality of first trace lines 210t that are connected to the plurality of first electrodes 210, respectively, may be controlled to be constant or substantially constant by controlling a width of the first-first portion 210ta and a length of the first-first portion 210ta in the peripheral area 200NA. Accordingly, the electronic device ED (e.g., refer to FIG. 1) with improved reliability may be provided.

FIG. 24 is a sectional view of the sensor layer taken along the line II-II' of FIG. 22 according to an embodiment of the present disclosure.

Referring to FIGS. 8, 22, and 24, the first-second portion 210tb may be disposed in the first conductive layer 202 and the second conductive layer 204.

The first-second portion 210tb may include a first sub-portion 210tb-1 and a second sub-portion 210tb-2.

The first sub-portion 210tb-1 may be disposed on the base layer 201. The intermediate insulating layer 203 may cover the first sub-portion 210tb-1.

The second sub-portion 210tb-2 may be disposed on the intermediate insulating layer 203. The cover insulating layer 205 may cover the second sub-portion 210tb-2. The first sub-portion 210tb-1 and the second sub-portion 210tb-2 may overlap with each other when viewed from above the plane (e.g., in a plan view).

According to some embodiments of the present disclosure, the first sub-portion 210tb-1 and the second sub-portion 210tb-2 may be electrically connected with each other through the contact hole CNT (e.g., refer to FIG. 22). A resistance of the first trace line 210t may be decreased by the first-second portion 210tb. Accordingly, the electronic device ED (e.g., refer to FIG. 1) with improved reliability may be provided.

In addition, a plurality of dams may be formed in the peripheral area 200NA to prevent or substantially prevent an organic monomer from overflowing when the organic monomer is printed to form the organic layer of the encapsulation layer 140. When the first-second portion 210tb extending in the second direction DR2 and overlapping with the plurality of dams is implemented with a single layer unlike in an embodiment of the present disclosure, a defect may occur due to a breakage that may be caused by a flexure formed by the plurality of dams. However, according to an embodiment of the present disclosure, the defect that may occur due to the plurality of dams may be prevented or substantially prevented by the first-second portion 210tb implemented with multiple layers. Accordingly, the electronic device ED (e.g., refer to FIG. 1) with improved reliability may be provided.

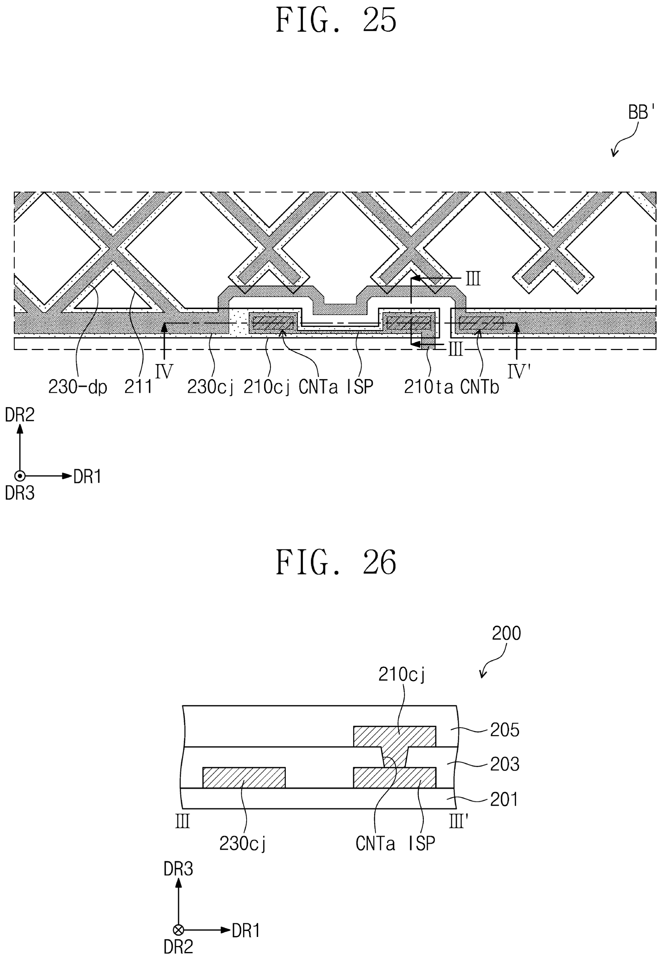

FIG. 25 is an enlarged plan view illustrating the area BB' of FIG. 22 according to an embodiment of the present disclosure.

Referring to FIGS. 8, 10, 22, and 25, the plurality of second divided electrodes 230-dp may be disposed in the first conductive layer 202, and the plurality of first patterns 211 may be disposed in the second conductive layer 204. The first patterns 211 may overlap with the plurality of second divided electrodes 230-dp when viewed from above the plane (e.g., in a plan view).

The plurality of first patterns 211 and the plurality of second divided electrodes 230-dp may be connected with the trace lines 210rt and 230rt2 (e.g., refer to FIG. 10) in a lower end portion of the sensor layer 200.

The first patterns 211 may be electrically connected to the first connection line 210cj. The first patterns 211 and the first connection line 210cj may be disposed in the same layer as each other, and may include the same material as each other. The first patterns 211 and the first connection line 210cj may be integrally connected with each other.

The first connection line 210cj may extend in the first direction DR1.

The sensor layer 200 may further include a connecting electrode ISP that overlaps with the first connection line 210cj when viewed from above the plane (e.g., in a plan view). The connecting electrode ISP may be disposed in a layer different from the layer in which the first connection line 210cj is disposed. The connecting electrode ISP may be disposed in the same layer as that of the second connection line 230cj.

The connecting electrode ISP may extend in the first direction DR1. The connecting electrode ISP may be integrally connected with the first-first portion 210ta. The connecting electrode ISP may be connected with the first connection line 210cj through a first contact hole CNTa.

The second divided electrodes 230-dp may be electrically connected to the second connection line 230cj. The second divided electrodes 230-dp and the second connection line 230cj may be disposed in the same layer as each other, and may include the same material as each other. The second divided electrodes 230-dp may be integrally connected with the second connection line 230cj.

The second connection line 230cj may extend in the first direction DR1. The second connection line 230cj may be implemented with multiple layers. In this case, the second connection line 230cj may be connected together through a second contact hole CNTb.

The first connection line 210cj and the second connection line 230cj may overlap with each other when viewed from above the plane (e.g., in a plan view). The first connection line 210cj and the second connection line 230cj may be electrically insulated from each other.

According to some embodiments of the present disclosure, the plurality of first electrodes 210 and the plurality of first trace lines 210t may be electrically connected to each other through the first connection line 210cj. The plurality of third electrodes 230 and the plurality of fifth trace lines 230rt2 may be electrically connected to each other through the second connection line 230cj. The first connection line 210cj and the second connection line 230cj may overlap with each other when viewed from above the plane (e.g., in a plan view). Accordingly, the electronic device ED (e.g., refer to FIG. 1) including the peripheral area 200NA having a reduced area may be provided.

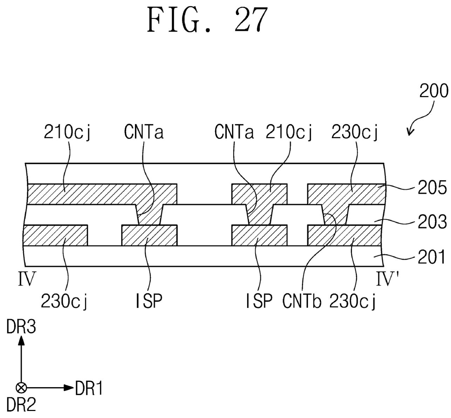

FIG. 26 is a sectional view of the sensor layer taken along the line III-III' of FIG. 25 according to an embodiment of the present disclosure. FIG. 27 is a sectional view of the sensor layer taken along the line IV-IV' of FIG. 25 according to an embodiment of the present disclosure.

Referring to FIGS. 8, 25, 26, and 27, the second connection line 230cj and the connecting electrode ISP may be disposed in the first conductive layer 202.

The first connection line 210cj may be disposed in the second conductive layer 204. The first connection line 210cj and the second connection line 230cj may be disposed in different layers from each other. At least a portion of the first connection line 210cj and at least a portion of the second connection line 230cj may overlap with each other when viewed from above the plane (e.g., in a plan view).

The second connection line 230cj and the connecting electrode ISP may be disposed on the base layer 201. The intermediate insulating layer 203 may cover the second connection line 230cj and the connecting electrode ISP.

The first connection line 210cj may be disposed on the intermediate insulating layer 203. The cover insulating layer 205 may cover the first connection line 210cj. The connecting electrode ISP may be connected with the first connection line 210cj through the first contact hole CNTa.

The second connection line 230cj may be implemented with multiple layers. The second connection line 230cj (e.g., the layers thereof) may be connected together through the second contact hole CNTb.

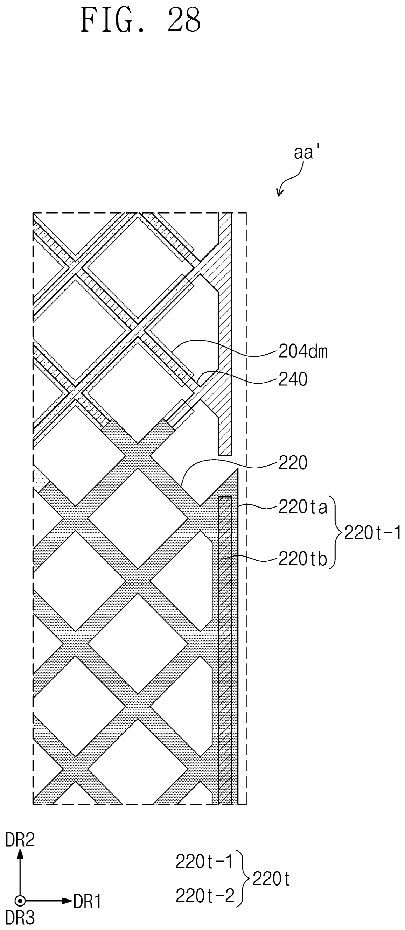

FIG. 28 is an enlarged plan view illustrating the area aa' of FIG. 10 according to an embodiment of the present disclosure.

Referring to FIGS. 8, 10, and 28, a portion of the fourth electrode 240 and a portion of the second electrode 220 are illustrated as an example. The second electrode 220 may have a mesh structure, and the fourth electrode 240 may also have a mesh structure. A width of a mesh line of the second electrode 220 may be greater than a width of a mesh line of the fourth electrode 240.

The second electrode 220 may be electrically connected with the second trace line 220t.

The sensor layer 200 may further include a dummy pattern 204dm. The dummy pattern 204dm may be floated, or may be electrically floated. The dummy pattern 204dm may be disposed in the second conductive layer 204. The dummy pattern 204dm may overlap with the fourth electrode 240 when viewed from above the plane (e.g., in a plan view).

According to some embodiments of the present disclosure, the dummy patterns 204dm may be provided in spaces where the first to fourth electrodes 210, 220, 230, and 240 are not disposed in each of the first conductive layer 202 and the second conductive layer 204. Each of the dummy patterns 204dm may also have a mesh structure. Accordingly, a probability that specific patterns will be visually recognized due to a reflection of external light may be decreased, because the mesh lines are entirely disposed in the sensing unit SU. In other words, the electronic device ED (e.g., refer to FIG. 1) may have improved visibility due to a reflection of the external light.

The second trace line 220t may include a second-first portion 220t-1 and a second-second portion 220t-2.

The second-first portion 220t-1 may extend in the second direction DR2. The second-first portion 220t-1 may include a third sub-portion 220ta and a fourth sub-portion 220tb.

The second electrode 220 and the third sub-portion 220ta may include the same material as each other, and may be disposed at (e.g., in or on) the same layer as each other. The second electrode 220 and the third sub-portion 220ta may be connected with each other to form a one-body shape. For example, the second electrode 220 and the third sub-portion 220ta may be disposed in the second conductive layer 204.

The fourth sub-portion 220tb may be disposed under the third sub-portion 220ta. The fourth sub-portion 220tb may overlap with the third sub-portion 220ta when viewed from above the plane (e.g., in a plan view). The fourth sub-portion 220tb may be electrically connected with the third sub-portion 220ta.

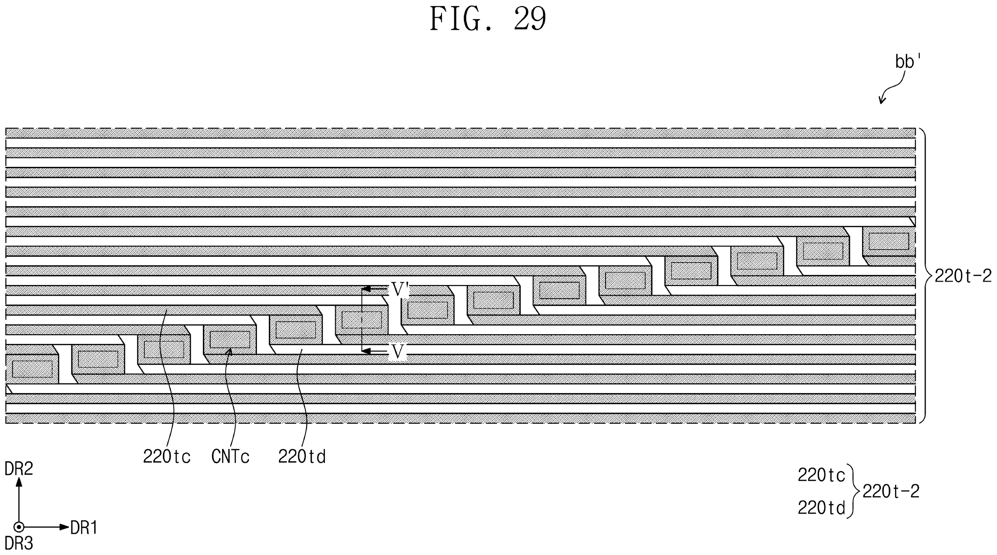

FIG. 29 is an enlarged plan view illustrating the area bb' of FIG. 10 according to an embodiment of the present disclosure.

Referring to FIGS. 8, 10, and 29, the second-second portion 220t-2 may be electrically connected with the second-first portion 220t-1 (e.g., refer to FIG. 28). For example, the second-second portion 220t-2 may be connected to a first end of the second-first portion 220t-1 (e.g., refer to FIG. 28). The second-second portion 220t-2 may extend in the first direction DR1.

The second-second portion 220t-2 may include a fifth sub-portion 220tc and a sixth sub-portion 220td. The fifth sub-portion 220tc and the sixth sub-portion 220td may be disposed in different layers from each other.

The second trace line 220t may be provided in a plurality. When viewed from above the plane (e.g., in a plan view), the fifth sub-portion 220tc of one of the plurality of second trace lines 220t and the sixth sub-portion 220td of another one of the plurality of second trace lines 220t may be adjacent to each other in the second direction DR2.

According to some embodiments of the present disclosure, the fifth sub-portion 220tc and the sixth sub-portion 220td of each of the plurality of second trace lines 220t may be alternately arranged along the second direction DR2. The sub-portions disposed in the different layers from each other may be disposed adjacent to each other. A space rule between adjacent lines may be satisfied. Accordingly, the electronic device ED (e.g., refer to FIG. 1) with improved reliability may be provided.

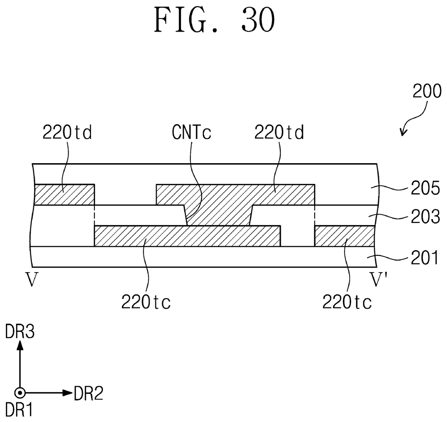

FIG. 30 is a sectional view of the sensor layer taken along the line V-V' of FIG. 29 according to an embodiment of the present disclosure.

Referring to FIGS. 8, 29, and 30, the fifth sub-portion 220tc may be disposed in the first conductive layer 202.

The sixth sub-portion 220td may be disposed in the second conductive layer 204.

The fifth sub-portion 220tc may be disposed on the base layer 201. The intermediate insulating layer 203 may cover the fifth sub-portion 220tc.

The sixth sub-portion 220td may be disposed on the intermediate insulating layer 203. The cover insulating layer 205 may cover the sixth sub-portion 220td. The sixth sub-portion 220td may be electrically connected with the fifth sub-portion 220tc through a third contact hole CNTc.

When viewed from above the plane (e.g., in a plan view), the fifth sub-portion 220tc of one of the plurality of second trace lines 220t and the sixth sub-portion 220td of another one of the plurality of second trace lines 220t may not overlap with each other.

According to some embodiments of the present disclosure, one second trace line 220t may have a line disposed in different layers by using the third contact hole CNTc. The fifth sub-portion 220tc and the sixth sub-portion 220td of each of the plurality of second trace lines 220t arranged in the second direction DR2 may be disposed in different layers from each other. A resistance deviation or variation between adjacent lines may be decreased. Accordingly, the electronic device ED (e.g., refer to FIG. 1) with improved reliability may be provided.

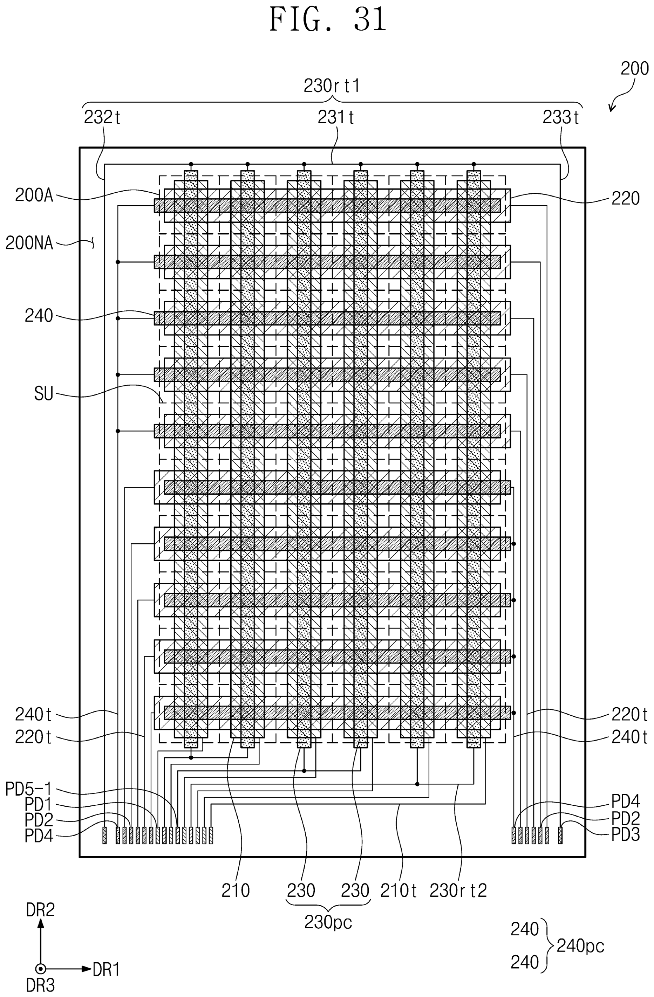

FIG. 31 is a plan view illustrating a sensor layer according to an embodiment of the present disclosure. In FIG. 31, the components that are the same or substantially the same as those described above with reference to FIG. 10 are assigned with the identical reference numerals, and thus, redundant description thereabout may not be repeated.

Referring to FIG. 31, the sensor layer 200 may include the plurality of first pads PD1 connected to the first trace lines 210t in a one-to-one correspondence, and fifth pads PD5-1 connected to the fifth trace lines 230rt2 in a one-to-one correspondence.

When viewed from above the plane (e.g., in a plan view), the first pads PD1 may be disposed on the first side of the sensor layer 200, and the fifth pads PD5-1 may be disposed adjacent to the first pads PD1.

As described above, the plurality of first electrodes may be electrically connected with the plurality of first trace lines, respectively, through the first connection line. The plurality of third electrodes may be electrically connected with the plurality of second trace lines, respectively, through the second connection line. The first connection line and the second connection line may overlap with each other when viewed from above the plane (e.g., in a plan view). Accordingly, the electronic device including the peripheral area having a reduced area may be provided.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims.

Embodiments are set out in the following clauses:
1. An electronic device comprising:
   a display layer; and
   a sensor layer on the display layer, and having a sensing area, and a peripheral area adjacent to the sensing area, the sensor layer comprising:
      a plurality of first electrodes in the sensing area, each of the first electrodes extending in a first direction, and comprising a sensing pattern and a bridge pattern;
      a plurality of second electrodes in the sensing area, each of the second electrodes extending in a second direction crossing the first direction;
      a plurality of third electrodes extending in the first direction in the sensing area and insulated from the first electrodes, each of the third electrodes comprising a plurality of divided electrodes;
      a first connection line in the peripheral area and electrically connected with the sensing pattern; and
      a second connection line in the peripheral area and electrically connected with the plurality of divided electrodes,
   wherein the plurality of third electrodes, the bridge pattern, and the second connection line are in a first conductive layer,
   wherein the sensing pattern, the plurality of second electrodes, and the first connection line are in a second conductive layer different from the first conductive layer, and
   wherein the first connection line and the second connection line overlap with each other in a plan view.
2. The electronic device of clause 1, wherein the first connection line and the sensing pattern are integrally connected with each other, and
   wherein the second connection line and the plurality of divided electrodes are integrally connected with each other.
3. The electronic device of clause 1 or clause 2, wherein the first connection line and the second connection line extend in the second direction.
4. The electronic device of any preceding clause, further comprising:
   a first trace line in the peripheral area and connected with the first connection line; and
   a second trace line in the peripheral area and connected to the second connection line.
5. The electronic device of clause 4, further comprising:
   a first pad in the peripheral area and connected with the first trace line; and
   a second pad in the peripheral area and connected with the second trace line.
6. The electronic device of clause 5, wherein the first trace line comprises a first-first portion extending in the second direction, and a first-second portion extending in the first direction and connected between the first-first portion and the first pad.
7. The electronic device of clause 6, wherein the first-first portion comprises a single layer in the first conductive layer or the second conductive layer, and
   wherein the first-second portion comprises multiple layers in the first conductive layer and the second conductive layer.
8. The electronic device of clause 6 or clause 7, wherein the sensor layer further comprises a connecting electrode overlapping with the first connection line in a plan view,
   wherein the first-first portion is integrally connected with the connecting electrode, and
   wherein the connecting electrode is connected with the first connection line through a contact hole.
9. The electronic device of any of clauses 5 to 8, wherein, in a plan view, the first pad is located on a first side of the sensor layer, and the second pad is located on a second side of the sensor layer spaced from the first side in the second direction.
10. The electronic device of any of clauses 5 to 9, wherein, in a plan view, the first pad is located on a first side of the sensor layer, and the second pad is located adjacent to the first pad.
11. The electronic device of any preceding clause, further comprising:
   a plurality of third trace lines in the peripheral area, and electrically connected with the plurality of second electrodes, respectively.
12. The electronic device of clause 11, wherein each of the plurality of third trace lines comprises:
   a third-first portion connected with one of the plurality of second electrodes, and extending in the first direction; and
   a third-second portion electrically connected with the third-first portion, and extending in the second direction.
13. The electronic device of clause 12, wherein the third-second portion comprises:
   a first sub-portion in the first conductive layer; and
   a second sub-portion in the second conductive layer and electrically connected with the first sub-portion.
14. The electronic device of clause 13, wherein, in a plan view, the first sub-portion of one of the plurality of third trace lines and the second sub-portion of another one of the plurality of third trace lines are adjacent to each other in the first direction, and do not overlap with each other.
15. The electronic device of any preceding clause, wherein the first connection line and the second connection line are electrically insulated from each other.
16. The electronic device of any preceding clause, wherein the sensing pattern overlaps with the plurality of divided electrodes in a plan view.
17. An electronic device comprising:
   a display layer; and
   a sensor layer on the display layer, and comprising:
      a plurality of first electrodes, each of the first electrodes extending in a first direction, and comprising a sensing pattern and a bridge pattern;
      a plurality of second electrodes, each of the second electrodes extending in the first direction, and comprising a plurality of divided electrodes;
      a first connection line integrally connected with the sensing pattern, and extending in a second direction crossing the first direction; and
      a second connection line integrally connected with the plurality of divided electrodes, and extending in the second direction,
   wherein the first connection line and the second connection line are located in different layers from each other, and
   wherein the first connection line and the second connection line overlap with each other in a plan view.
18. The electronic device of clause 17, further comprising:
   a first trace line connected with the first connection line; and
   a second trace line connected to the second connection line.
19. The electronic device of clause 18, wherein the first trace line comprises:
   a first-first portion extending in the second direction, and comprising a single layer; and
   a first-second portion extending from the first-first portion in the first direction, and comprising multiple layers.
20. The electronic device of clause 18 or clause 19, further comprising:
   a first pad connected with the first trace line; and
   a second pad connected with the second trace line,
   wherein, in a plan view, the first pad is located on a first side of the sensor layer, and the second pad is located on a second side of the sensor layer spaced from the first side in the second direction.

## Claims

1. An electronic device comprising:
a display layer (100); and
a sensor layer (200) on the display layer (100), and having a sensing area (200A), and a peripheral area (200NA) adjacent to the sensing area (200A), the sensor layer (200) comprising:
a plurality of first electrodes (210) in the sensing area (200A), each of the first electrodes (210) extending in a first direction, and comprising a sensing pattern (211) and a bridge pattern (212);
a plurality of second electrodes (220) in the sensing area (200A), each of the second electrodes (220) extending in a second direction crossing the first direction;
a plurality of third electrodes (230) extending in the first direction in the sensing area (200A) and insulated from the first electrodes (210), each of the third electrodes (230) comprising a plurality of divided electrodes;
a first connection line (210cj) in the peripheral area (200NA) and electrically connected with the sensing pattern (211); and
a second connection line (230cj) in the peripheral area (200NA) and electrically connected with the plurality of divided electrodes,
wherein the plurality of third electrodes (230), the bridge pattern (212), and the second connection line (230cj) are in a first conductive layer (202),
wherein the sensing pattern (211), the plurality of second electrodes (220), and the first connection line (210cj) are in a second conductive layer (204) different from the first conductive layer (202), and
wherein the first connection line (210cj) and the second connection line (230cj) overlap with each other in a plan view.

2. The electronic device of claim 1, wherein the first connection line (210cj) and the sensing pattern (211) are integrally connected with each other, and
wherein the second connection line (230cj) and the plurality of divided electrodes are integrally connected with each other.

3. The electronic device of claim 1 or claim 2, wherein the first connection line (210cj) and the second connection line (230cj) extend in the second direction.

4. The electronic device of any preceding claim, further comprising:
a first trace line (210t) in the peripheral area (200NA) and connected with the first connection line (210cj); and
a second trace line (220t) in the peripheral area (200NA) and connected to the second connection line (230cj).

5. The electronic device of claim 4, further comprising:
a first pad in the peripheral area (200NA) and connected with the first trace line (210t); and
a second pad in the peripheral area (200NA) and connected with the second trace line (220t).

6. The electronic device of claim 5, wherein the first trace line (210t) comprises a first-first portion (210ta) extending in the second direction, and a first-second portion (210tb) extending in the first direction and connected between the first-first portion (210ta) and the first pad.

7. The electronic device of claim 6, wherein the first-first portion (210ta) comprises a single layer in the first conductive layer (202) or the second conductive layer (204), and
wherein the first-second portion (210tb) comprises multiple layers in the first conductive layer (202) and the second conductive layer (204).

8. The electronic device of claim 6 or claim 7, wherein the sensor layer (200) further comprises a connecting electrode (ISP) overlapping with the first connection line (210cj) in a plan view,
wherein the first-first portion (210ta) is integrally connected with the connecting electrode (ISP), and
wherein the connecting electrode (ISP) is connected with the first connection line (210cj) through a contact hole (CNT).

9. The electronic device of any of claims 5 to 8, wherein, in a plan view, the first pad is located on at least one of:
a first side of the sensor layer (200), wherein the second pad is located on a second side of the sensor layer (200) spaced from the first side in the second direction.
a first side of the sensor layer (200), wherein the second pad is located adjacent to the first pad.

10. The electronic device of any preceding claim, further comprising:
a plurality of third trace lines (230t) in the peripheral area (200NA), and electrically connected with the plurality of second electrodes (220), respectively,

11. The electronic device of claim 10, wherein each of the plurality of third trace lines (230t) comprises:
a third-first portion connected with one of the plurality of second electrodes (220), and extending in the first direction; and
a third-second portion electrically connected with the third-first portion, and extending in the second direction.

12. The electronic device of claim 11, wherein the third-second portion comprises:
a first sub-portion in the first conductive layer (202); and
a second sub-portion in the second conductive layer (204) and electrically connected with the first sub-portion,
wherein optionally, in a plan view, the first sub-portion of one of the plurality of third trace lines (230t) and the second sub-portion of another one of the plurality of third trace lines (230t) are adjacent to each other in the first direction, and do not overlap with each other.

13. The electronic device of any preceding claim, wherein the first connection line (210cj) and the second connection line (230cj) are electrically insulated from each other.

14. The electronic device of any preceding claim, wherein the sensing pattern (211) overlaps with the plurality of divided electrodes in a plan view.

15. An electronic device comprising:
a display layer (100); and
a sensor layer (200) on the display layer (100), and comprising:
a plurality of first electrodes (210), each of the first electrodes (210) extending in a first direction, and comprising a sensing pattern (211) and a bridge pattern (212);
a plurality of second electrodes (220), each of the second electrodes (220) extending in the first direction, and comprising a plurality of divided electrodes;
a first connection line (210cj) integrally connected with the sensing pattern (211), and extending in a second direction crossing the first direction; and
a second connection line (230cj) integrally connected with the plurality of divided electrodes, and extending in the second direction,
wherein the first connection line (210cj) and the second connection line (230cj) are located in different layers from each other, and
wherein the first connection line (210cj) and the second connection line (230cj) overlap with each other in a plan view.

16. The electronic device of claim 15, further comprising:
a first trace line (210t) connected with the first connection line (210cj), wherein the first trace line (210t) optionally comprises:
a first-first portion (210ta) extending in the second direction, and comprising a single layer; and
a first-second portion (210tb) extending from the first-first portion (210ta) in the first direction, and comprising multiple layers; and
a second trace line (220t) connected to the second connection line (230cj).

17. The electronic device of claim 16, further comprising:
a first pad connected with the first trace line (210t); and
a second pad connected with the second trace line (220t),
wherein, in a plan view, the first pad is located on a first side of the sensor layer (200), and the second pad is located on a second side of the sensor layer (200) spaced from the first side in the second direction.
